# EUROPÄISCHE PATENTSCHRIFT

(11) **EP 3 744 545 B1**
(45) Veröffentlichungstag und Bekanntmachung des Hinweises auf die Patenterteilung: **06.04.2022**
(21) Anmeldenummer: 19177423.1
(22) Anmeldetag: 29.05.2019
(51) Int. Cl.: B60J 7/06, B60J 7/185

(54) **ENDLAUFWAGEN**
END TROLLEY
ÉQUERRE COULISSANTE ARRIÈRE

(43) Veröffentlichungstag der Anmeldung: 02.12.2020
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A1- 2 619 023
- EP-A2- 1 136 292
- US-A- 4 740 029

## Beschreibung

### Technisches Gebiet

Die vorliegende Erfindung betrifft einen Endlaufwagen für eine Schiebeverdeckstruktur eines Nutzfahrzeug- oder Anhängeraufbaus. Außerdem betrifft die vorliegende Erfindung eine Schiebeverdeckstruktur für einen Nutzfahrzeug- oder Anhängeraufbau und einen Fahrzeuganhänger.

### Hintergrund

Zahlreiche Nutzfahrzeug- oder Anhängeraufbauten weisen eine Spriegelkonstruktion zur Anbringung einer Plane auf. Mit der Plane kann auf der Ladefläche des Nutzfahrzeug- oder Anhängeraufbaus transportiertes Ladegut abgedeckt und beispielsweise vor Regen geschützt werden.

Bei einer üblichen Spriegelkonstruktion wird die Plane beispielsweise im Dachbereich des Nutzfahrzeug- oder Anhängeraufbaus durch mehrere, in bestimmten Abständen vorgesehene Dachquerspriegel von unten abgestützt, die dafür sorgen, dass die Plane selbst bei Ansammlung von Wasser oder Eis auf dem Dach nicht zu sehr durchhängt. Des Weiteren tragen die Dachquerspriegel zur Stabilität des Anhängeraufbaus und einer entsprechenden Gesamtkonstruktion bei.

Um die Ladungshöhe eines Planenaufbaus beim Be- oder Entladen vollständig ausnutzen zu können, offenbart die EP 3 170 721 A1 eine Spriegelkonstruktion, bei der eine Abdeckung zum Beladen angehoben werden kann.

Alternativ können zur Verbesserung der Be- und Entlademöglichkeiten eines Nutzfahrzeug- oder Anhängeraufbaus im Dachbereich über Rollen verschiebbare Spriegel oder Streben, wie sie beispielsweise in der DE 298 21 546 U1 sowie in der DE 10 2012 006 387 A1 und der DE 20 2012 003 230 U1 offenbart sind, vorgesehen sein.

Die DE 10 2013 201 000 A1 offenbart eine Schiebeverdeckstruktur mit über Rollenwagen verschiebbaren Spriegeln. Mittels der Schiebverdeckstruktur können die Spriegel mit der darauf liegenden Plane zusammengeschoben werden, so dass der Dachbereich geöffnet wird. Die Öffnung der Schiebeverdeckstruktur erfolgt von hinten nach vorne oder von vorne nach hinten, d.h., die Dachquerspriegel werden zum Öffnen nach vorne bzw. nach hinten verschoben und das Dach wird im hinteren bzw. vorderen Bereich geöffnet. Ein Abschluss der Schiebeverdeckstruktur wird durch einen zwischen zwei Endrollenwagen verlaufenden Portalbalken gebildet. Der Portalbalken dient einerseits dazu, die Plane als in Querrichtung versteifendes Element an einem Nutzfahrzeug- oder Anhängeraufbau zu befestigen. Andererseits greifen typischerweise die Verschlüsse der Türen in den Portalbalken ein.

Die DE 10 2014 208 213 A1 offenbart eine weitere Schiebeverdeckstruktur, die einen mit Endlaufwagen verbundenen Portalbalken aufweist. Die WO 2012/038440 A1 offenbart eine Schiebeverdeckstruktur mit einem Endlaufwagen, an dem eine Abdeckung angebracht ist, die unter Verwendung von Gasfedern geöffnet und geschlossen wird.

Üblicherweise umfasst der Portalbalken einen nach unten abgewinkelten Bereich, der ein hinteres Ende von sich in der Längsrichtung erstreckenden Dachholmen umgreift und verhindert, dass sich der Endlaufwagen aus dem geschlossenen Zustand der Schiebeverdeckstruktur ungewollt nach vorne bewegt. Zum Öffnen der Schiebeverdeckstruktur wird der Portalbalken angehoben und damit außer Eingriff mit dem hinteren Ende der Dachholme gebracht. Im angehobenen Zustand kann der Endlaufwagen mit dem daran angebrachten Portalbalken nach vorne verschoben werden. Dabei wird der Portalbalken beispielsweise durch eine Gasdruckfeder in dem angehobenen Zustand gehalten. Andererseits kann durch die Gasdruckfeder ein ungewolltes Anheben des Portalbalkens aus dem geschlossenen Zustand verhindert werden.

Der Öffnungswinkel bzw. Aufstellwinkel des Portalbalkens ist durch die Gasdruckfeder begrenzt und ist meist so gering, dass der Portalbalken im Wesentlichen lediglich angehoben, dabei aber nur geringfügig nach vorne bewegt wird. Auch im angehobenen Zustand bedeckt der Portalbalken in einer Draufsicht auf den Planenaufbau von oben einen Teil der Ladefläche. Dadurch werden die Be- und Entlademöglichkeiten eingeschränkt.

Ein der Erfindung zu Grunde liegendes Problem besteht darin, einen einfach und kostengünstig herzustellenden und wartungsarmen Endlaufwagen zur Verfügung zu stellen, der verbesserte Be- und Entlademöglichkeiten eines Nutzfahrzeug- oder Anhängeraufbaus mit einer Schiebeverdeckstruktur bietet.

### Darstellung der Erfindung

Gemäß einem Aspekt der vorliegenden Offenbarung umfasst ein Endlaufwagen für eine Schiebeverdeckstruktur eines Nutzfahrzeug- oder Anhängeraufbaus ein Grundelement zur verschiebbaren Anbringung an einem Dachholm (Längsgurt) des Nutzfahrzeug- oder Anhängeraufbaus, und einen schwenkbar an dem Grundelement angebrachten Aufstellarm zum Aufstellen eines an dem Aufstellarm befestigten Abschlusselements der Schiebeverdeckstruktur. Der Aufstellarm ist in eine offene Stellung bringbar, in der der Aufstellarm um mehr als 90° in Bezug auf eine geschlossene Stellung geschwenkt ist.

Damit ist ein vergrößerter Öffnungswinkel bzw. Aufstellwinkel des Aufstellarms mit dem Abschlusselement von mehr als 90° erreichbar, wodurch der Öffnungsbereich im geöffneten Zustand einer Schiebeverdeckstruktur erheblich vergrößert wird. Der Bereich der Ladefläche, der in einer Draufsicht auf den Nutzfahrzeug- oder Anhängeraufbau von oben durch die zusammengefaltete bzw. zusammengeschobene Plane und den Endlaufwagen mit dem Abschlusselement bedeckt wird, wird im Vergleich zu Lösungen mit einem Aufstellwinkel von weniger als 90° verkleinert. Die obere Be- und Entladeöffnung im Bereich des offenen Daches wird vergrößert.

Der Aufstellarm kann in der offenen Stellung um mehr als 90°, 100° oder um mehr als 120° in Bezug auf die geschlossene Stellung geschwenkt sein. Die Schwenkung kann um eine quer zum Dachholm, d.h. in der Links-Rechts-Richtung, verlaufende Achse erfolgen. Die geschlossene Stellung entspricht der Stellung, in der die Schiebeverdeckstruktur geschlossen ist. In der geschlossenen Stellung kann das Abschlusselement auf dem Dachholm aufliegen oder einen geringen Abstand von beispielsweise weniger als 20 mm oder weniger als 5 mm zu dem Dachholm aufweisen. In der geschlossenen Stellung kann der Aufstellarm im Wesentlichen horizontal, d.h. im Wesentlichen parallel zum Dachholm, ausgerichtet sein. Das Abschlusselement kann ein Portalbalken bzw. Endbalken oder ein Endspriegel bzw. Heckspriegel sein.

Der Aufstellarm ist in eine erste offene Stellung, in der der Aufstellarm um weniger als 90° in Bezug auf die geschlossene Stellung geschwenkt ist, und in eine zweite offene Stellung, in der der Aufstellarm um mehr als 90° in Bezug auf die geschlossene Stellung geschwenkt ist, bringbar. Der Endlaufwagen weist einen Haltemechanismus auf, der dazu ausgebildet ist, den Aufstellarm in der ersten offenen Stellung zu halten, in der der Aufstellarm um weniger als 90° in Bezug auf die geschlossene Stellung geschwenkt ist. Der Haltemechanismus kann auch dazu ausgebildet sein, den Aufstellarm in der zweiten offenen Stellung zu halten, in der der Aufstellarm um mehr als 90° in Bezug auf die geschlossene Stellung geschwenkt ist.

Die erste offene Stellung kann beim Öffnen/Aufschieben und/oder Schließen/Zuschieben der Schiebeverdeckstruktur von Vorteil sein, da das Zusammenfalten bzw. Entfalten der Dachplane durch das Abschlusselement in der ersten offenen Stellung nicht behindert wird. Insbesondere muss von einem Bediener kein sogenannter Überschlag erbracht werden. Der Haltemechanismus kann ohne Verwendung einer Gasdruckfeder ausgebildet sein. Somit muss beim Anheben und beim Absenken des Abschlusselements kein bei einer Gasdruckfeder vorhandener Totpunkt bzw. eine Gegenkraft überwunden werden, mithin wird diesbezüglich mit der wirkenden Schwerkraft gearbeitet.

Der Endlaufwagen kann einen Haltemechanismus aufweisen, der dazu ausgebildet ist, den Aufstellarm in der zweiten offenen Stellung zu halten, in der der Aufstellarm um mehr als 90° in Bezug auf die geschlossene Stellung geschwenkt ist. Mit dieser Ausgestaltung kann verhindert werden, dass das Abschlusselement in der zweiten offenen Stellung auf die Dachplane fällt bzw. darauf aufliegt und dass der Aufstellarm beispielsweise gegen eine in dem Grundelement ausgebildete Kante schlägt.

Der Endlaufwagen kann einen frei pendelnd an dem Aufstellarm angebrachten Aufstellfuß aufweisen, der dazu ausgebildet ist, den Aufstellarm in mindestens einer offenen Stellung abzustützen. Der Aufstellfuß kann den Aufstellarm in der mindestens einen offenen Stellung beispielsweise auf dem Grundelement abstützen.

Der Begriff "frei pendelnd" bedeutet, dass der Aufstellfuß an einem Ende gelenkig an dem Aufstellarm angebracht ist und das andere (freie) Ende des Aufstellfußes in einem Zustand, in dem es nicht auf einem anderen Bauteil aufliegt, durch die auf den Aufstellfuß wirkende Schwerkraft lotrecht nach unten ausgerichtet wird. D.h., eine Längserstreckungsrichtung des Aufstellfußes verläuft von dem Punkt, an dem der Aufstellfuß gelenkig an dem Aufstellarm angebracht ist, im Wesentlichen senkrecht nach unten. Der Schwerpunkt des Aufstellfußes befindet sich auf einer lotrechten Geraden unterhalb des Punktes, an dem der Aufstellfuß gelenkig an dem Aufstellarm angebracht ist. Das freie Ende des Aufstellfußes ist nicht an einem anderen Bauteil des Endlaufwagens befestigt. Insbesondere ist das freie Ende des Aufstellfußes nicht an dem Grundelement befestigt. In der offenen Stellung kann die Längserstreckungsrichtung des Aufstellfußes zwischen dem Aufstellarm und dem Grundelement so ausgerichtet sein, dass der Aufstellarm auf dem Grundelement abgestützt wird. Anstelle einer frei pendelnden Anbringung ist eine Zwangsführung des Aufstellfußes möglich.

Der Aufstellfuß kann in der offenen Stellung mit dem Grundelement formschlüssig und/oder kraftschlüssig in Eingriff sein bzw. gebracht werden. Beispielsweise kann das freie Ende des Aufstellfußes auf dem Grundelement aufliegen oder in eine Aussparung in dem Grundelement eingefügt sein, und der Aufstellfuß kann dadurch den Aufstellarm in der offenen Stellung abstützen, so dass der Aufstellarm in der offenen Stellung bleibt. In einem solchen arretierten Zustand wird der Aufstellarm durch den Aufstellfuß auf dem Grundelement abgestützt bzw. der Aufstellarm wird durch den Aufstellfuß gehalten. Bei einem Öffnungswinkel von weniger als 90° kann eine Bewegung bzw. Schwenkung des Aufstellarms in die geschlossene Stellung verhindert werden und eine auf das Abschlusselement wirkende Schwerkraft kann einer weiteren Vergrößerung des Öffnungswinkels entgegenwirken. Bei einem Öffnungswinkel von mehr als 90° kann eine weitere Vergrößerung des Öffnungswinkels durch den Aufstellfuß verhindert werden und eine auf das Abschlusselement wirkende Schwerkraft kann einer Bewegung bzw. Schwenkung in der entgegengesetzten Richtung, d.h. in Richtung eines kleineren Öffnungswinkels, entgegenwirken.

Ein derartiger Endlaufwagen ist kostengünstig herzustellen und weist eine rein mechanische, wartungsarme sowie beeinträchtigungslose Funktionsweise auf. Insbesondere ist die Verwendung einer Gasdruckfeder nicht erforderlich. Als Aufstellfuß kann ein Bauteil mit festen bzw. starren Abmessungen verwendet werden. Insbesondere kann der Aufstellfuß ein längliches Bauteil mit fester Länge sein. Alternativ kann der Aufstellfuß aus einem elastischen Material bzw. jeglichem geeigneten Material ausgebildet sein. Ein Ende des Aufstellfußes in seiner Längserstreckungsrichtung kann gelenkig an dem Aufstellarm angebracht sein. Ein Wartungsaufwand und damit verbundene Kosten können reduziert werden.

Der Aufstellfuß kann den Aufstellarm in der ersten offenen Stellung und in der zweiten offenen Stellung auf dem Grundelement abstützen.

Der Aufstellfuß kann ein längliches Bauteil sein, das an einem Ende in seiner Längserstreckungsrichtung gelenkig an dem Aufstellarm angebracht ist und an dem anderen Ende einen Vorsprung aufweist, der dazu ausgebildet ist, in einem Zustand, in dem der Aufstellfuß den Aufstellarm in einer offenen Stellung abstützt, auf dem Grundelement aufzuliegen. Die Verwendung eines derartigen Aufstellfußes ist kostengünstiger als die Verwendung einer Gasdruckfeder. Durch den Vorsprung wird ein sicherer Eingriff mit dem Grundelement gewährleistet. Alternativ zu dem Vorsprung kann eine andere Ausgestaltung bzw. Form verwendet werden, die einen sicheren Eingriff mit dem Grundelement gewährleistet. Ein Ende des Aufstellfußes kann verjüngt sein und dazu ausgebildet sein, in einem Zustand, in dem der Aufstellfuß den Aufstellarm in einer offenen Stellung abstützt, mit einer Aussparung oder Vertiefung in dem Grundelement in Eingriff zu sein und dadurch einen sicheren Halt des Aufstellarms zu gewährleisten.

Der Aufstellarm kann eine Aussparung aufweisen, die dazu ausgebildet ist, den Aufstellfuß in einer geschlossenen Stellung des Endlaufwagens aufzunehmen. Somit kann der Aufstellfuß in der geschlossenen Stellung platzsparend und sicher untergebracht werden.

In dem Grundelement kann mindestens eine Aussparung ausgebildet sein, mit der ein freies Ende des Aufstellfußes in der offenen Stellung in Eingriff bringbar ist. Durch die Aussparung wird ein sicherer Eingriff des freien Endes des Aufstellfußes mit dem Grundelement gewährleistet. Bei der Aussparung kann es sich beispielsweise um ein Loch oder einen vertieften Abschnitt bzw. eine Vertiefung/Delle handeln.

In dem Grundelement können mindestens zwei Aussparungen ausgebildet sein, mit denen das freie Ende des Aufstellfußes in mindestens zwei offenen Stellungen in Eingriff bringbar ist. Damit sind mindestens zwei offene Stellungen realisierbar, in denen der Aufstellarm sicher arretiert bzw. gehalten werden kann.

Das Grundelement und der Aufstellarm können jeweils aus einer Platte aus einem festen Werkstoff, beispielsweise aus Metall oder aus Polyoxymethylen (POM), ausgebildet sein, und eine obere Oberfläche des Grundelements und eine obere Oberfläche des Aufstellarms können in einer geschlossenen Stellung eine ebene Auflagefläche für eine Dachplane bilden. Die Auflagefläche dient zur sicheren und problemlosen Auflage der Dachplane.

An dem Grundelement kann ein Loch und/oder ein Haken und/oder eine Öse zur Anbringung einer Vorrichtung zum Verschieben des Endlaufwagens ausgebildet sein. Beispielsweise kann eine Schlaufe oder automatische Zuziehhilfe zum Verschieben des Endlaufwagens z. B. durch einen Verwender in Bewegung seitlich des Fahrzeuganhängers infolge des Beladungszustandes auf jenem Fahrzeuganhänger verwendet werden, wodurch ein separates Entsperren einer Längsbewegung entfällt.

Der Endlaufwagen kann einen Aufstellfuß und ein Schieberelement aufweisen, die einen Mechanismus zum Arretieren bzw. Halten des Aufstellarms bilden. Ein Ende des Aufstellfußes kann schwenkbar an dem Aufstellarm angebracht sein und das andere Ende des Aufstellfußes kann schwenkbar an dem Schieberelement angebracht sein. Das Schieberelement kann relativ zu dem Grundelement und dem Aufstellarm in einem Bereich mit einer bestimmten Länge zwischen einer Grundposition und einer verschobenen Position längsverschiebbar sein sowie zwischen der verschobenen Position und einer geschwenkten Position schwenkbar sein. D.h., das Schieberelement kann in drei verschiedenen Positionen relativ zu dem Grundelement und dem Aufstellarm angeordnet sein. Der Aufstellarm kann durch Lageänderung des Schieberelements relativ zu dem Grundelement mittels des Aufstellfußes zwischen der geschlossenen Stellung und der offenen Stellung geschwenkt werden. D.h., die Lage des Schieberelements ist mit der Stellung des Aufstellarms u. a. über den Aufstellfuß verknüpft.

Der Aufstellarm kann in der geschlossenen Stellung sein, wenn sich das Schieberelement in der Grundposition befindet, und der Aufstellarm kann durch den Aufstellfuß in einer offenen Stellung gehalten werden, wenn sich das Schieberelement in der geschwenkten Position befindet. D.h., die geschlossene Stellung des Aufstellarms kann der Grundposition des Schieberelements entsprechen, und die offene Stellung des Aufstellarms kann der geschwenkten Position des Schieberelements entsprechen. Das Grundelement kann eine Aussparung aufweisen, die dazu ausgebildet ist, in der geschwenkten Position des Schieberelements einen an dem Schieberelement vorgesehenen Vorsprung aufzunehmen und durch Eingriff mit dem Vorsprung eine Längsverschiebung des Schieberelements relativ zu dem Grundelement und dem Aufstellarm zu verhindern. Das Schieberelement kann ein Führungselement aufweisen, das dazu ausgebildet ist, in der geschwenkten Position durch eine Führungsschiene der Schiebeverdeckstruktur geführt zu werden und eine Schwenkung des Schieberelements von der geschwenkten Position zu der verschobenen Position zu verhindern. D.h., durch das Führungselement kann das Schieberelement in der geschwenkten Position gehalten werden. Damit kann der Aufstellarm in der offenen Stellung gehalten werden.

Ein derartiger Endlaufwagen ist kostengünstig herzustellen und weist eine rein mechanische, wartungsarme sowie beeinträchtigungslose Funktionsweise auf. Insbesondere ist die Verwendung einer Gasdruckfeder nicht erforderlich. Ein Wartungsaufwand und damit verbundene Kosten können reduziert werden.

Die Aussparung des Grundelements, die in der geschwenkten Position des Schieberelements eine Längsverschiebung des Schieberelements relativ zu dem Grundelement und dem Aufstellarm verhindert, kann L-förmig sein. Beispielsweise kann die Aussparung ein L-förmiges Loch sein. Die Aussparung kann dazu ausgebildet sein, den an dem Schieberelement vorgesehenen Vorsprung während der Längsverschiebung des Schieberelements zwischen der Grundposition und der verschobenen Position und während der Schwenkung des Schieberelements zwischen der verschobenen Position und der geschwenkten Position zu führen. D.h., die Aussparung kann das Schieberelement bei der Verschiebung und der Schwenkung des Schieberelements relativ zu dem Grundelement und dem Aufstellarm zwischen den oben genannten drei Positionen führen. Dadurch wird eine problemlose Funktionsweise des Mechanismus zum Arretieren bzw. Halten des Aufstellarms gewährleistet. Die L-förmige Aussparung kann auf einer Seite, beispielsweise nach oben, offen sein, so dass der Vorsprung des Schieberelements aus der Aussparung herausgeführt werden kann und das Schieberelement zusammen mit dem Aufstellfuß und dem Aufstellarm in eine weitere offene Stellung mit einem größeren Öffnungswinkel als in der offenen Stellung, die der geschwenkten Position entspricht, geschwenkt werden kann.

Das Schieberelement kann ein Langloch aufweisen, durch das ein Stift verläuft, der das Grundelement und den Aufstellarm schwenkbar verbindet. Durch diese Ausgestaltung können die Längsverschiebbarkeit und die Schwenkbarkeit des Schieberelements relativ zu dem Grundelement und dem Aufstellarm auf einfache Weise umgesetzt werden.

Das Schieberelement kann ein längliches Bauteil sein und in zumindest einem Teil in der Längserstreckungsrichtung in einem Querschnitt senkrecht zu der Längserstreckungsrichtung ein im Wesentlichen U-förmiges Profil aufweisen. Ein derart ausgebildetes Schieberelement weist eine hohe mechanische Festigkeit auf und kann den darauf wirkenden Kräften standhalten.

Der Endlaufwagen kann einen schwenkbar an dem Grundelement angebrachten Aufstellfuß mit einer Kulissenführung aufweisen. Der Aufstellarm kann dazu ausgebildet sein, in der mindestens einen offenen Stellung mit der Kulissenführung in Eingriff gebracht zu werden, so dass er in der mindestens einen offenen Stellung abgestützt wird und auf den Aufstellfuß die Schwerkraft des Abschlusselementes zur Fixierung wirkt.

Ein weiterer Aspekt betrifft einen Endlaufwagen, der zwei Teilwagen umfasst, die jeweils ein Grundelement und einen Aufstellarm aufweisen. Die zwei Teilwagen sind durch ein an den beiden Aufstellarmen befestigtes Abschlusselement und ein weiteres, an den beiden Grundelementen befestigtes Verbindungselement miteinander verbunden. Das Verbindungselement ist an einem zu dem Abschlusselement in der geschlossenen Stellung entgegengesetzten Bereich der beiden Grundelemente befestigt und verbindet die Grundelemente starr miteinander. Das Verbindungselement und die beiden Teilwagen weisen in einer Draufsicht von oben eine U-förmige Ausgestaltung auf, wobei das "U" in der Richtung offen ist, in der die Schiebeverdeckstruktur geschlossen wird. Mit anderen Worten, das Verbindungselement bildet die untere, geschlossene Seite des "U", und die Grundelemente der beiden Teilwagen nebst den beiden Aufstellarmen bilden jeweils eine Seite des "U". Das Abschlusselement befindet sich in der geschlossenen Position des Aufstellarms an dem oberen, offenen Ende des "U". Beim Öffnen des Endlaufwagens wird das Abschlusselement zu einem Öffnungswinkel von mehr als 90° in Richtung der unteren, geschlossenen Seite des "U" geschwenkt, d.h., das Abschlusselement befindet sich in der zweiten offenen Stellung beispielsweise in einem Bereich vertikal über dem Verbindungselement. In dem Bereich innerhalb des "U" sind in der zweiten offenen Stellung keine Verbindungselemente angeordnet. Somit kann in der zweiten offenen Stellung der gesamte Bereich innerhalb des "U" als Teil der Be- und Entladeöffhung genutzt werden. In einer solchen Ausgestaltung erfolgt die Verbindung der beiden Teilwagen bevorzugt ausschließlich über das Abschlusselement und das Verbindungselement, so dass in dem Bereich innerhalb des "U" in der zweiten offenen Stellung keine weiteren Verbindungselemente angeordnet sind, die einer vergrößerten Be- bzw. Entladeöffnung entgegenstehen bzw. diese verringern.

Gemäß einem weiteren Aspekt der vorliegenden Offenbarung weist eine Schiebeverdeckstruktur einen Dachholm und einen Endlaufwagen nach dem obigen Aspekt auf.

Die Schiebeverdeckstruktur kann einen Mechanismus aufweisen, der dazu ausgebildet ist, eine Arretierung des Aufstellarms mit dem daran befestigten Abschlusselement, durch die der Aufstellarm und das Abschlusselement in einer offenen Stellung gehalten werden, bei einem Verschieben des Endlaufwagens in einer Richtung zum Schließen der Schiebeverdeckstruktur zu lösen, so dass der Aufstellarm mit dem daran befestigten Abschlusselement aufgrund der Schwerkraft in die geschlossene Stellung geschwenkt wird. Eine derartige Schiebeverdeckstruktur erlaubt ein automatisches Absenken bzw. Schließen des Abschlusselements beim Schließen der Schiebeverdeckstruktur. Die Schwerkraft wirkt beispielsweise auf den Aufstellarm und/oder das Abschlusselement. Die automatische Entriegelung kann in einer bestimmten offenen Stellung, beispielsweise bei einem Öffnungswinkel von weniger als 90°, erfolgen.

An dem Dachholm kann ein Entriegelungselement angebracht sein, das dazu ausgebildet ist, den Aufstellfuß beim Verschieben des Endlaufwagens in einer Richtung zum Schließen der Schiebeverdeckstruktur außer Eingriff mit dem Grundelement zu bringen. Somit erfolgt die Entriegelung der Arretierung automatisch beim Schließen der Schiebeverdeckstruktur. Der Aufstellfuß, der den Aufstellarm und das daran befestigte Abschlusselement in der offenen Stellung hält, wird beim Verschieben des Endlaufwagens nach hinten oder nach vorne in die Endstellung, in der die Schiebeverdeckstruktur geschlossen ist, durch das Entriegelungselement außer Eingriff mit dem Grundelement gebracht. Es ist keine separate Entriegelung erforderlich, um den Aufstellarm mit dem Abschlusselement von der offenen in die geschlossene Stellung zu schwenken.

Die Schiebeverdeckstruktur kann eine Mehrzahl von Dachquerspriegeln und einen Endlaufwagen mit zwei Teilwagen aufweisen. Die zwei Grundelemente der zwei Teilwagen können durch einen der Mehrzahl von Dachquerspriegeln, der als Verbindungselement dient, starr miteinander verbunden sein. Der Dachquerspriegel, der als Verbindungselement dient, kann identisch mit den anderen Dachquerspriegeln der Schiebeverdeckstruktur ausgebildet sein. Durch die Verwendung eines Dachquerspriegels als Verbindungselement wird die Fertigung der Schiebeverdeckstruktur durch den Einsatz gleicher Teile nach dem sogenannten Baukastensystem optimiert und Herstellungskosten werden gesenkt.

An dem Dachholm der Schiebeverdeckstruktur kann eine Führungsschiene zur Führung des Führungselements des Schieberelements vorgesehen sein. Die Führungsschiene kann beispielsweise im Bereich von 0,5 cm bis 10 cm vor dem hinteren Ende des Dachholms enden oder sich in Form und/oder Lage verändern.

Im geöffneten Zustand der Schiebeverdeckstruktur kann das Führungselement durch die Führungsschiene so geführt werden, dass das Schieberelement des Endlaufwagens in der geschwenkten Position arretiert ist, in der der Aufstellarm mit dem Abschlusselement durch den Aufstellfuß in der ersten offenen Stellung gehalten bzw. abgestützt wird. Wenn das Führungselement beim Verschieben des Endlaufwagens nach hinten bzw. vorne zum Schließen der Schiebeverdeckstruktur das Ende der Führungsschiene erreicht, kann die Arretierung des Schieberelements in der geschwenkten Position gelöst werden und das Schieberelement kann über die verschobene Position in die Grundposition zurückgebracht werden, wobei der Aufstellarm mit dem Abschlusselement entsprechend in die geschlossene Stellung schwenkt.

Ein weiterer Aspekt der vorliegenden Offenbarung betrifft einen Fahrzeuganhänger mit einer Schiebeverdeckstruktur nach dem obigen Aspekt.

Ein weiterer Aspekt der vorliegenden Offenbarung betrifft einen Endlaufwagen für eine Schiebeverdeckstruktur eines Nutzfahrzeug- oder Anhängeraufbaus, mit einem Grundelement zur verschiebbaren Anbringung an einem Dachholm des Nutzfahrzeug- oder Anhängeraufbaus, einem schwenkbar an dem Grundelement angebrachten Aufstellarm zum Aufstellen eines an dem Aufstellarm befestigten Abschlusselements der Schiebeverdeckstruktur, und einem frei pendelnd an dem Aufstellarm angebrachten Aufstellfuß, wobei der Aufstellarm durch Eingriff des Aufstellfußes mit dem Grundelement in einer offenen Stellung arretierbar ist, in der das Abschlusselement von dem Dachholm abgehoben ist. Nach diesem Aspekt muss der Aufstellarm nicht notwendigerweise in eine offene Stellung bringbar sein, in der der Aufstellarm um mehr als 90° in Bezug auf die geschlossene Stellung geschwenkt ist. Der Öffnungswinkel in der offenen Stellung kann 90° oder weniger als 90° betragen.

Ein weiterer Aspekt der vorliegenden Offenbarung betrifft einen Endlaufwagen für eine Schiebeverdeckstruktur eines Nutzfahrzeug- oder Anhängeraufbaus, mit einem Grundelement zur verschiebbaren Anbringung an einem Dachholm des Nutzfahrzeug- oder Anhängeraufbaus, und einem schwenkbar an dem Grundelement angebrachten Aufstellarm zum Aufstellen eines an dem Aufstellarm befestigten Abschlusselements der Schiebeverdeckstruktur. In dem Grundelement kann ein Anschlag, beispielsweise eine Kante, vorgesehen sein, der dazu ausgebildet ist, den Aufstellarm in einer offenen Stellung zu halten, in der der Aufstellarm um mehr als 90° in Bezug auf die geschlossene Stellung geschwenkt ist. Bei dieser Ausgestaltung ist kein Aufstellfuß erforderlich. Durch den Anschlag kann verhindert werden, dass der Aufstellarm bzw. das daran befestigte Abschlusselement in der offenen Stellung auf der Dachplane aufliegt.

### Kurze Beschreibung der Zeichnungen

Weitere Merkmale und Aspekte dieser Offenbarung werden durch die folgende Beschreibung und die beiliegenden Zeichnungen offensichtlich, von denen:
Fig. 1 eine perspektivische Ansicht eines Sattelanhängers von links vorne zeigt,
Fig. 2 eine perspektivische Ansicht einer Schiebeverdeckstruktur von einer erhöhten Position links hinten zeigt,
Fig. 3 eine perspektivische Ansicht eines Endlaufwagens mit zwei Teilwagen, einem Dachquerspriegel und einem Portalbalken gemäß einer ersten Ausführungsform von einer erhöhten Position links hinten zeigt,
Fig. 4 eine perspektivische Ansicht eines linken Teilwagens gemäß der ersten Ausführungsform von einer erhöhten Position links hinten zeigt,
Fig. 5A eine Seitenansicht des Endlaufwagens gemäß der ersten Ausführungsform mit einem Aufstellarm in einer ersten offenen Stellung zeigt, Fig. 5B eine Seitenansicht des Endlaufwagens gemäß der ersten Ausführungsform mit dem Aufstellarm in einer geschlossenen Stellung zeigt, und Fig. 5C eine Seitenansicht des Endlaufwagens gemäß der ersten Ausführungsform mit dem Aufstellarm in einer zweiten offenen Stellung zeigt,
Fig. 6A eine Draufsicht des linken Teilwagens gemäß der ersten Ausführungsform mit dem Aufstellarm in der ersten offenen Stellung zeigt, Fig. 6B eine Draufsicht des linken Teilwagens gemäß der ersten Ausführungsform mit dem Aufstellarm in der geschlossenen Stellung zeigt, und Fig. 6C eine Draufsicht des linken Teilwagens gemäß der ersten Ausführungsform mit dem Aufstellarm in der zweiten offenen Stellung zeigt,
Fig. 7A bis 7C schematisch die Funktionsweise eines Entriegelungselements zeigen,
Fig. 8 eine perspektivische Ansicht eines rechten Teilwagens eines Endlaufwagens gemäß einer zweiten Ausführungsform von einer erhöhten rechten Position zeigt,
Fig. 9A bis 9D sowie 10A und 10B schematisch die Funktionsweise eines Mechanismus zum Arretieren bzw. Halten eines Aufstellarms gemäß der zweiten Ausführungsform zeigen,
Fig. 11 eine perspektivische Ansicht eines Teils eines linken Teilwagens eines abgewandelten Endlaufwagens gemäß der zweiten Ausführungsform von einer erhöhten linken Position zeigt,
Fig. 12 eine perspektivische Ansicht des linken Teilwagens des abgewandelten Endlaufwagens gemäß der zweiten Ausführungsform von einer erhöhten rechten Position zeigt,
Fig. 13A eine Seitenansicht des abgewandelten Endlaufwagens gemäß der zweiten Ausführungsform mit dem Aufstellarm in einer geschlossenen Stellung zeigt, Fig. 13B eine Seitenansicht des abgewandelten Endlaufwagens gemäß der zweiten Ausführungsform mit dem Aufstellarm in einer ersten offenen Stellung zeigt, und Fig. 13C eine Seitenansicht des abgewandelten Endlaufwagens gemäß der zweiten Ausführungsform mit dem Aufstellarm in einer zweiten offenen Stellung zeigt,
Fig. 14A eine Draufsicht des linken Teilwagens des abgewandelten Endlaufwagens gemäß der zweiten Ausführungsform mit dem Aufstellarm in der geschlossenen Stellung zeigt, Fig. 14B eine Draufsicht des linken Teilwagens des abgewandelten Endlaufwagens gemäß der zweiten Ausführungsform mit dem Aufstellarm in der ersten offenen Stellung zeigt, und Fig. 14C eine Draufsicht des linken Teilwagens des abgewandelten Endlaufwagens gemäß der zweiten Ausführungsform mit dem Aufstellarm in der zweiten offenen Stellung zeigt, und
Fig. 15 schematisch einen Aufstellarm und einen Aufstellfuß mit einer Kulissenführung gemäß einer Abwandlung des Endlaufwagens gemäß der ersten Ausführungsform zeigt.

### Ausführliche Beschreibung von Ausführungsbeispielen

In der Beschreibung dieser Erfindung beziehen sich Richtungsangaben auf einen Fahrzeuganhänger bei Vorwärtsfahrt. Eine Vorne-Hinten-Richtung verläuft entlang einer Vorwärtsfahrtrichtung V des Fahrzeuganhängers. In seitlicher Richtung bedeutet diejenige Richtung, die in einer horizontalen Ebene senkrecht zu der Vorwärtsfahrtrichtung V des Fahrzeuganhängers verläuft und der Links-Rechts-Richtung entspricht. Außen bedeutet am linken oder rechten seitlichen Rand des Fahrzeuganhängers. Innen bedeutet zwischen dem linken und rechten seitlichen Rand des Fahrzeuganhängers.

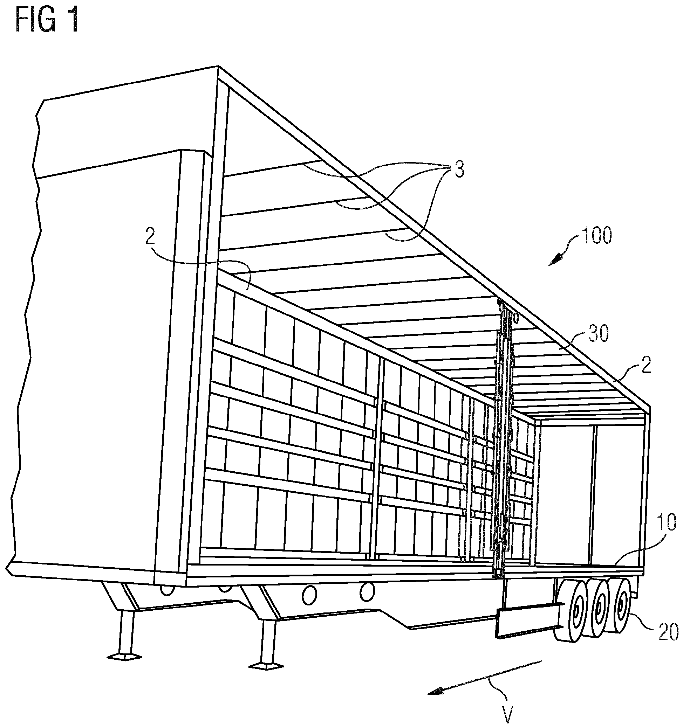

Im Folgenden wird eine erste Ausführungsform der vorliegenden Offenbarung in Bezug auf die Figuren 1 bis 7C und 15 beschrieben.

Fig. 1 zeigt einen Sattelanhänger 100 als ein Beispiel eines Fahrzeuganhängers in einer perspektivischen Ansicht von links vorne. Der Sattelanhänger 100 weist ein Fahrgestell mit Rädern 20 und einen Planenaufbau mit einem Ladeboden 10 auf. Ein Dach des Planenaufbaus wird randseitig durch zwei Dachholme 2 begrenzt, die parallel zueinander in der Vorne-Hinten-Richtung auf der linken Seite und der rechten Seite des Dachs verlaufen. Zwischen den Dachholmen 2 sind mehrere (beispielsweise 20) Dachquerspriegel 3 angeordnet, die eine Plane auf dem Dach des Planenaufbaus von unten abstützen. Die Dachquerspriegel 3 verlaufen im Wesentlichen parallel zueinander in der Links-Rechts-Richtung. Die Plane liegt im Dachbereich auf den Dachquerspriegeln 3 auf und ist an den Dachquerspriegeln 3 festgezurrt oder anderweitig befestigt. Die Dachholme 2 und die Dachquerspriegel 3 sind Bestandteile einer Schiebeverdeckstruktur 30.

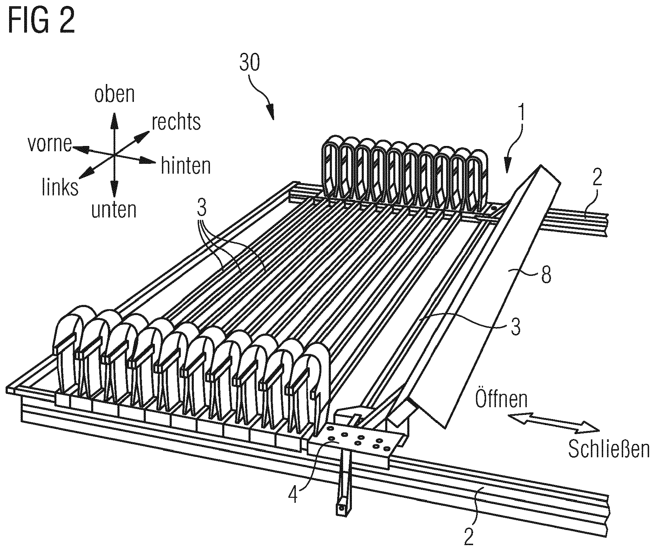

Fig. 2 zeigt eine perspektivische Ansicht der Schiebeverdeckstruktur 30, die das Dach des Planenaufbaus bildet. Die Dachquerspriegel 3 der Schiebeverdeckstruktur 30 können mit der daran befestigten Plane zusammengeschoben werden, und das Dach kann somit zum Be- oder Entladen geöffnet werden. Beim Zusammenschieben werden die Abstände zwischen den benachbarten Dachquerspriegeln 3 verkürzt und die Plane wird beispielsweise anhand einer an den Dachquerspriegeln 3 angebrachten Faltvorrichtung zusammengefaltet. Zum Schließen des Dachs werden die Dachquerspriegel 3 der Schiebeverdeckstruktur 30 auseinandergezogen und die Plane wird entfaltet. Die Dachquerspriegel 3 sind beispielsweise über Laufrollen verschiebbar an den Dachholmen 2 angebracht.

Das Zusammenschieben der Dachquerspriegel 3 beim Öffnen der Schiebeverdeckstruktur 30 erfolgt, wie in Figur 2 dargestellt ist, üblicherweise von hinten nach vorne, kann jedoch auch in der umgekehrten Richtung erfolgen. In der vorliegenden Ausführungsform ist der am weitesten hinten gelegene Dachquerspriegel 3 an einem linken Teilwagen und einem rechten Teilwagen eines Endlaufwagens 1 angebracht. Alternativ können die zwei Teilwagen durch ein anderes Verbindungselement als einen Dachquerspriegel 3 miteinander verbunden sein.

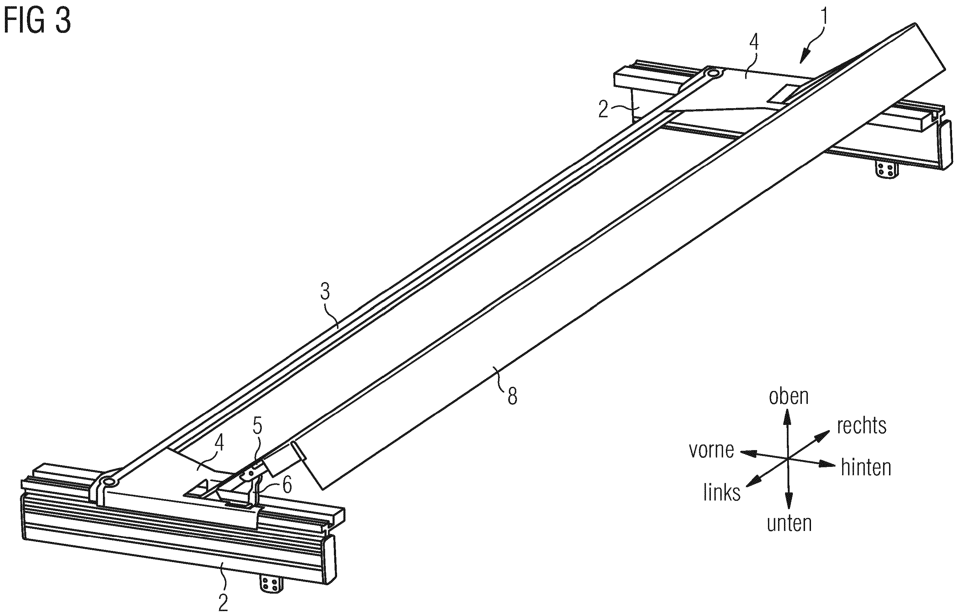

Fig. 3 zeigt eine perspektivische Ansicht des Endlaufwagens 1 mit den zwei Teilwagen, dem Dachquerspriegel 3 und einem Portalbalken 8. Jeder der beiden Teilwagen umfasst ein Grundelement 4, das entsprechend auf der linken oder der rechten Seite an einem der beiden Enden des Dachquerspriegels 3 befestigt ist, sowie einen Mechanismus zum Arretieren bzw. Halten des Portalbalkens (Endbalkens) 8 in zwei offenen Stellungen. Anstelle des Portalbalkens 8 kann ein Endspriegel an den beiden Teilwagen angebracht sein. In diesem Fall ist der Dachquerspriegel 3, der die beiden Grundelemente 4 miteinander verbindet, nicht der am weitesten hinten gelegene (letzte) Dachquerspriegel, sondern der vorletzte Dachquerspriegel, und der letzte Dachquerspriegel ist an dem Mechanismus zum Arretieren bzw. Halten befestigt.

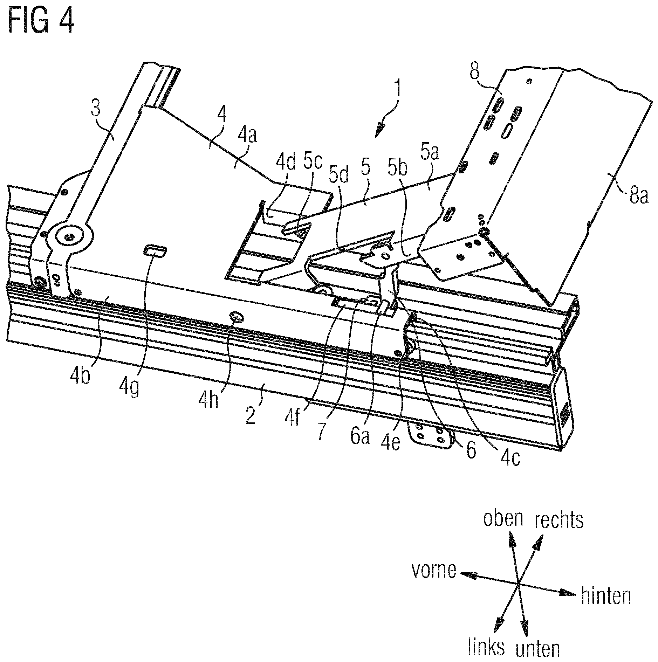

Fig. 4 zeigt eine perspektivische Ansicht des linken Teilwagens. Das Grundelement 4 des linken Teilwagens ist an einem äußeren linken hinteren Teil des Dachquerspriegels 3 befestigt. Das Grundelement 4 weist einen flachen, plattenartigen Bereich 4a, einen an der Außenseite des Dachholms 2 angeordneten, nach unten umgekanteten Bereich 4b, einen weiteren, in einer Laufschiene des Dachholms 2 angeordneten, nach unten umgekanteten Bereich 4c und einen dem umgekanteten Bereich 4c über eine in dem flachen Bereich 4a ausgebildete Aussparung gegenüberliegenden, nach unten umgekanteten Bereich 4d auf. An dem Dachquerspriegel 3 und an den nach unten umgekanteten Bereichen 4b und 4c sind Lauf- und Führungsrollen 4e zur Verschiebung des Endlaufwagens 1 entlang des Dachholms 2 angebracht.

An den beiden nach unten umgekanteten Bereichen 4c und 4d ist ein vorderes Ende eines Aufstellarms 5 gelenkig angebracht. Der Aufstellarm 5 weist einen flachen, plattenartigen Bereich 5a und zwei nach unten umgekantete Bereiche 5b und 5c an den beiden seitlichen Rändern des flachen Bereichs 5a auf. Das vordere Ende des Aufstellarms 5 ist an den nach unten umgekanteten Bereichen 5b und 5c beispielsweise mittels jeweils eines Stifts gelenkig an den nach unten umgekanteten Bereichen 4c und 4d des Grundelements 4 angebracht. Der Aufstellarm 5 ist somit um eine in der Links-Rechts-Richtung verlaufende Achse relativ zu dem Grundelement 4 schwenkbar. An dem hinteren, entgegensetzten Ende des Aufstellarms 5 ist der Portalbalken 8 befestigt.

In einem mittleren Bereich des Aufstellarms 5 in der Vorne-Hinten-Richtung ist eine Aussparung 5d in dem flachen Bereich 5a und dem außen liegenden umgekanteten Bereich 5b ausgebildet. Ein Abschnitt des außen liegenden umgekanteten Bereichs 5b steht von hinten in die Aussparung 5d vor. An dem vorstehenden Abschnitt des umgekanteten Bereichs 5b ist ein Aufstellfuß 6 in einer Ebene senkrecht zu der Links-Rechts-Richtung frei pendelnd angebracht. Der Aufstellfuß 6 ist ein längliches Bauteil. Ein Ende des Aufstellfußes 6 ist beispielsweise mittels eines Stifts gelenkig an dem vorstehenden Abschnitt des umgekanteten Bereichs 5b angebracht, so dass der Aufstellfuß 6 um eine in der Links-Rechts-Richtung verlaufende Achse relativ zu dem Aufstellarm 5 geschwenkt werden kann. An dem gegenüberliegenden (freien) Ende weist der Aufstellfuß 6 einen in seitlicher Richtung nach außen vorstehenden Vorsprung 6a in Form eines Stifts auf.

Der Vorsprung 6a kann mit einer der Aussparung 5d in dem Aufstellarm 5 gegenüberliegenden Aussparung 4f, die entlang der Kante zwischen dem flachen Bereich 4a und dem umgekanteten Bereich 4c des Grundelements 4 ausgebildet ist, in Eingriff gebracht werden. Insbesondere kann der Vorsprung 6a in einem Zustand, in dem sich der Aufstellfuß 6 von dem Aufstellarm 5 lotrecht nach unten erstreckt, mit der Aussparung 4f in Eingriff gebracht werden, indem der Vorsprung 6a in der Aussparung 4f auf dem umgekanteten Bereich 4c aufliegt, wie in Figur 4 dargestellt ist. Alternativ kann anstelle der Aussparung 4f im Bereich der Kante zwischen dem flachen Bereich 4a und dem umgekanteten Bereich 4c ein abgesenkter bzw. vertiefter Bereich ausgebildet sein, mit dem der Vorsprung 6a in Eingriff gebracht werden kann. Durch den Eingriff mit der Aussparung 4f oder dem abgesenkten bzw. vertieften Bereich wird der Aufstellarm 5 in einer ersten offenen Stellung arretiert bzw. gehalten, in der der Portalbalken 8 von dem Dachholm 2 abgehoben ist. Der Vorsprung 6a wird im Wesentlichen durch die auf den Portalbalken 8 wirkende Schwerkraft über den Aufstellarm 5 nach unten auf den umgekantenten Bereich 4c gedrückt, so dass der Vorsprung 6a aufgrund der damit verbundenen Reibung nicht nach vorne wegrutscht. Zudem ist im Bereich der Aussparung 4f in dem umgekanteten Bereich 4c eine Vertiefung ausgebildet, die ein Wegrutschen des Vorsprungs 6a verhindert. Der Aufstellarm 5 wird somit durch den Aufstellfuß 6 auf dem Grundelement 4 abgestützt.

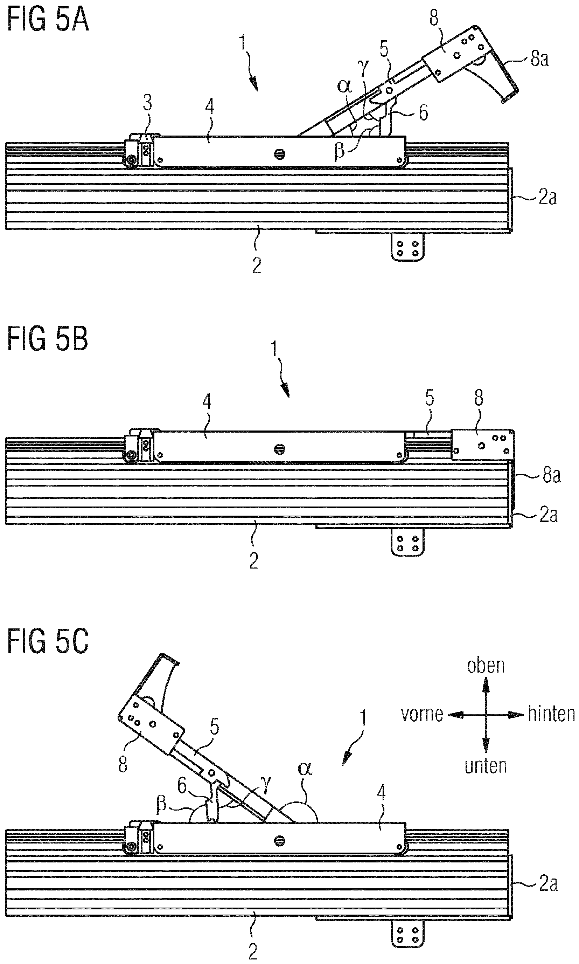

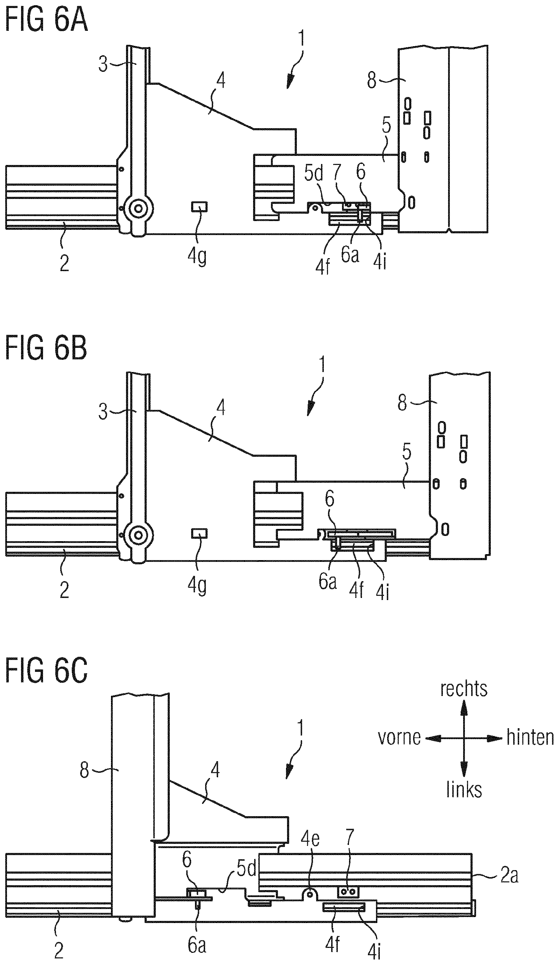

Fig. 5A zeigt eine Seitenansicht des Endlaufwagens 1 in der ersten offenen Stellung. In der ersten offenen Stellung liegt ein Öffnungswinkel (Aufstellwinkel) α zwischen dem Grundelement 4 bzw. dem Dachholm 2 und dem Aufstellarm 5 beispielsweise im Bereich von 5° bis 80° oder im Bereich von 30° bis 80° oder im Bereich von 45° bis 70°. Ein Auflagewinkel β zwischen dem Aufstellfuß 6 und dem Grundelement 4 bzw. dem Dachholm 2 auf der vorderen Seite des Aufstellfußes 6 beträgt in der ersten offenen Stellung ungefähr 90°. Der Auflagewinkel β kann in der ersten offenen Stellung im Bereich von 70° bis 110° oder von 80° bis 100° liegen, solange gewährleistet ist, dass der Vorsprung 6a aufgrund der Reibung durch die auf den Portalbalken 8 wirkende Schwerkraft und den Formschluss mit der in der Aussparung 4f ausgebildeten Vertiefung in der offenen Stellung bleibt, d.h., nicht ohne Weiteres nach vorne wegrutscht. Je nach Ausgestaltung kann der Auflagewinkel β in der ersten offenen Stellung höchstens 90° oder weniger als 90° betragen. Ein Pendelwinkel γ zwischen dem Aufstellarm 5 und dem Aufstellfuß 6 beträgt in der ersten offenen Stellung 180°-α-β. Fig. 6A zeigt eine Draufsicht des linken Teilwagens in der ersten offenen Stellung von oben.

Fig. 5B zeigt eine Seitenansicht des Endlaufwagens 1 in einer geschlossenen Stellung. In der geschlossenen Stellung beträgt der Öffnungswinkel α ungefähr 0° bzw. liegt im Bereich von -10° bis +10° oder im Bereich von - 3° bis +3°, d.h., Aufstellarm 5 ist im Wesentlichen horizontal angeordnet, wobei der Aufstellarm 5 um -3° bis +3° in Bezug auf die Horizontale geneigt sein kann. In der geschlossenen Stellung ist das freie Ende des Aufstellfußes 6 mit dem Vorsprung 6a nach vorne geschwenkt und der Aufstellfuß 6 ist innerhalb der Aussparung 5d des Aufstellarms 5 angeordnet, wie in der Darstellung in Fig. 6B gezeigt ist. Der Auflagewinkel β beträgt in der geschlossenen Stellung ungefähr 180° bzw. liegt im Bereich von 160° bis 200°, d.h., das freie Ende des Aufstellfußes 6 ragt nach vome. Alternativ kann das freie Ende des Aufstellfußes 6 in der geschlossenen Stellung nach hinten ragen, so dass der Auflagewinkel β ungefähr 0° beträgt bzw. im Bereich von -20° bis +20° liegt. Der Pendelwinkel γ beträgt weniger als 20° oder weniger als 10° oder weniger als 5°, wenn das freie Ende des Aufstellarms 6 in der geschlossenen Stellung nach vorne ragt. In der geschlossenen Stellung liegen der Aufstellarm 5 und der Portalbalken 8 auf dem Dachholm 2 auf bzw. weisen lediglich einen sehr geringen Abstand von beispielsweise maximal 20 mm oder maximal 5 mm zu einer oberen Oberfläche des Dachholms 2 auf. Ein nach unten umgekanteter hinterer Bereich 8a des Portalbalkens 8 umgreift ein hinteres Ende 2a des Dachholms 2 und liegt an dem hinteren Ende 2a des Dachholms 2 an bzw. weist einen sehr geringen Abstand von beispielsweise maximal 20 mm oder maximal 5 mm zu dem hinteren Ende 2a des Dachholms 2 auf. Somit kann der Endlaufwagen 1 aufgrund eines Eingriffs des nach unten umgekanteten Bereichs 8a des Portalbalkens 8 mit dem hinteren Ende 2a des Dachholms 2 in der geschlossenen Stellung nicht nach vorne verschoben werden. Die Schiebeverdeckstruktur 30 wird daher im geschlossenen Zustand gehalten und fixiert. Bei dieser Ausgestaltung muss der Endlaufwagen 1 nicht in dem geschlossenen Zustand der Schiebeverdeckstruktur 30 verriegelt werden. Somit ist keine Vorrichtung, wie beispielsweise ein Seil nebst Verriegelungsbolzen, zum Entriegeln des Endlaufwagens 1 erforderlich. Auch eine Verriegelung des Aufstellarms 5 mit dem Portalbalken 8 in der geschlossenen Stellung ist nicht erforderlich. Es muss keine Gasdruckfeder vorgesehen sein, deren Totpunkt bei der Schwenkung des Aufstellarms 5 zwischen der geschlossenen Stellung und der ersten offenen Stellung überwunden werden muss. Der nach unten umgekantete Bereich 8a des Portalbalkens 8 kann sich in der geschlossenen Stellung beispielsweise um mehr als 5 cm oder mehr als 20 cm nach unten erstrecken. Zudem kann der Portalbalken 8 nach hinten vorstehende Verschlüsse für Hecktüren aufweisen. Auch durch eine Verriegelung der Hecktüren an den Verschlüssen kann der Portalbalken 8 in der geschlossenen Stellung gehalten werden.

Fig. 5C zeigt eine Seitenansicht des Endlaufwagens 1 in einer zweiten offenen Stellung. Fig. 6C zeigt eine entsprechende Draufsicht des linken Teilwagens von oben. In der zweiten offenen Stellung beträgt der Öffnungswinkel α mehr als 90°. Der Öffnungswinkel α kann in der zweiten offenen Stellung beispielsweise mehr als 90° oder mehr als 95° oder mehr als 100° oder mehr als 110° oder mehr als 120° betragen. Der Öffnungswinkel α liegt in der zweiten offenen Stellung beispielsweise im Bereich von 80° bis 170° oder im Bereich von 110° bis 160°. Der Auflagewinkel β beträgt in der zweiten offenen Stellung ungefähr 90°. Der Auflagewinkel β kann in der zweiten offenen Stellung im Bereich von 70° bis 100° liegen. Der Pendelwinkel γ ist in der zweiten offenen Stellung negativ, d.h., im Vergleich zu der ersten offenen Stellung ist der Aufstellfuß 6 in der zweiten offenen Stellung auf die andere Seite des Aufstellarms 5 (die obere Seite des Aufstellarms 5 in der Darstellung in Fig. 4) geschwenkt.

Das freie Ende des Aufstellfußes 6 ist verjüngt. In der zweiten offenen Stellung ragt das verjüngte freie Ende des Aufstellfußes 6 in eine in dem flachen Bereich 4a des Grundelements 4 ausgebildete Aussparung 4g und der Vorsprung 6a liegt am Rand der Aussparung 4g auf dem flachen Bereich 4a auf. Somit ist der Aufstellarm 5 in der zweiten offenen Stellung über den Aufstellfuß 6 durch Eingriff des freien Endes des Aufstellfußes 6 mit dem Grundelement 4 bzw. durch Eingriff des Vorsprungs 6a mit dem flachen Bereich 4a arretiert. Alternativ kann das freie Ende des Aufstellfußes 6 in der zweiten offenen Stellung auf dem flachen Bereich 4a des Grundelements 4 aufliegen. Die Aussparung 4g kann weggelassen werden.

Der Portalbalken 8 befindet sich in der zweiten offenen Stellung oberhalb des Grundelements 4 in einem vorderen Bereich des Endlaufwagens 1 bzw. ragt über das darunter liegende Grundelement 4 und den an dem Grundelement 4 befestigten Dachquerspriegel 3 hinaus nach vorne vor. Der Aufstellfuß 6 wird durch die auf den Portalbalken 8 wirkende Schwerkraft in Richtung auf das Grundelement 4 gedrückt.

Neben dem in den Figuren 4 bis 6C dargestellten linken Teilwagen umfasst die Schiebeverdeckstruktur 30 auch einen rechten Teilwagen mit einer ähnlichen Ausgestaltung, die im Wesentlichen spiegelsymmetrisch zu der Ausgestaltung des linken Teilwagens ist und eine entsprechende Funktionsweise aufweist. Der linke und der rechte Teilwagen sind durch den in Figur 3 gezeigten Dachquerspriegel 3 starr miteinander verbunden und somit gemeinsam und parallel zueinander entlang der Dachholme 2 verschiebbar. Der Portalbalken 8 ist an den Aufstellarmen 5 der beiden Teilwagen befestigt. Wie anhand der Figur 6C in Verbindung mit der Figur 3 ersichtlich ist, sind die beiden Teilwagen bzw. deren Grundelemente 4, der Portalbalken 8 und der Dachquerspriegel 3 in der zweiten offenen Stellung in einer Draufsicht von oben im Wesentlichen U-förmig angeordnet, wobei die Figur 6C den linken Teil des nach hinten offenen "U" zeigt. Der Portalbalken 8 und der Dachquerspriegel 3 sind in der zweiten offenen Stellung in einem vorderen Bereich angeordnet und bilden die untere Seite des "U". Die beiden Grundelemente 4 der beiden Teilwagen ragen nach hinten und bilden die beiden Seiten des "U". In dem hinteren Bereich des Endlaufwagens 1, d.h. auf der Oberseite des "U", ist zwischen den beiden Teilwagen kein weiteres Verbindungselement, insbesondere kein weiterer Dachquerspriegel, angeordnet. Aufgrund dieser U-förmigen Ausgestaltung kann der hintere Bereich des Endlaufwagens 1 in der zweiten offenen Stellung als Teil der vergrößerten Be- und Entladeöffnung zum Be- bzw. Entladen genutzt werden.

Zum Öffnen der Schiebeverdeckstruktur 30 wird der Portalbalken 8, beispielsweise mittels einer Stange, von der geschlossenen Stellung in einen Bereich über die erste offene Stellung hinaus, beispielsweise zu einem Öffnungswinkel α von ca. 90°, angehoben bzw. umgeklappt. Dabei wird der Aufstellarm 5 um die in der Links-Rechts-Richtung verlaufende Achse um den Öffnungswinkel α in Bezug auf die geschlossene Stellung geschwenkt. Der frei pendelnd an dem Aufstellarm 5 angebrachte Aufstellfuß 6 wird durch die Schwerkraft im Wesentlichen lotrecht nach unten ausgerichtet. Wird der Portalbalken 8 aus dieser Stellung nach hinten zu der ersten offenen Stellung oder nach vorne zu der zweiten offenen Stellung abgesenkt, kommt der Vorsprung 6a des Aufstellfußes 6 mit der Aussparung 4f, 4g in Eingriff, so dass der Aufstellarm 5 mit dem Portalbalken 8 in der offenen Stellung arretiert bzw. gehalten wird. In diesem Zustand kann der Endlaufwagen 1 entlang der Dachholme 2 nach vorne verschoben werden. Bevorzugt befinden sich die Aufstellarme 5 der beiden Teilwagen beim Verschieben des Endlaufwagens 1 in der ersten offenen Stellung, so dass der Portalbalken 8 das Zusammenfalten der Dachplane nicht behindert.

Zum Schließen der Schiebeverdeckstruktur 30 wird der Endlaufwagen 1 nach hinten in Richtung auf das hintere Ende 2a der beiden Dachholme 2 verschoben. An den Dachholmen 2 ist auf einer Oberseite in dem Bereich, in dem sich das an dem umgekanteten Bereich 4c anliegende freie Ende 6b des Aufstellfußes 6 beim Verschieben des Endlaufwagens 1 entlang der Dachholme 2 bewegt, jeweils ein Entriegelungselement 7 angebracht. Das Entriegelungselement 7 kann ein flaches Bauteil sein, das die Verschiebung des Grundelements 4 und des Dachquerspriegels 3 entlang des Dachholms 2 nicht beeinträchtig, aber so weit von einer Oberfläche des Dachholms 2 vorsteht, dass das Entriegelungselement 7 beim Verschieben des Endlaufwagens 1 in der ersten offenen Stellung mit dem freien Ende 6b des Aufstellfußes 6, das von dem Vorsprung 6a weiter nach unten ragt, in Eingriff kommt. Das Entriegelungselement 7 kann eine Dicke im Bereich von 1 mm bis 30 mm oder im Bereich von 5 mm bis 10 mm aufweisen.

Wenn der Portalbalken 8 beim Öffnen der Schiebeverdeckstruktur 30 in die erste offene Stellung angehoben wird, während sich der Endlaufwagen 1 an der in den Figuren 3 bis 6C dargestellten hinteren Position befindet, kann das freie Ende des Aufstellfußes 6 auf dem Entriegelungselement 7 aufliegen, so dass der Aufstellfuß 6 auf dem Entriegelungselement 7 steht, wie aus den Figuren 4 und 6A ersichtlich ist. Wird der Endlaufwagen 1 dann zum Öffnen der Schiebeverdeckstruktur 30 nach vorne geschoben, wird das freie Ende des Aufstellfußes 6 durch Eingriff des Vorsprungs 6a mit einem hinteren Ende 4i der Aussparung 4f mit nach vorne geschoben, so dass das freie Ende des Aufstellfußes 6 nach vorne von dem Entriegelungselement 7 rutscht und der Vorsprung 6a in der Aussparung 4f auf dem nach unten umgekantenen Bereich 4c zu liegen kommt.

Wenn der Endlaufwagen 1 beim Schließen der Schiebeverdeckstruktur 30 in der ersten offenen Stellung von vorne nach hinten entlang des Dachholms 2 über das Entriegelungselement 7 geschoben bzw. gezogen wird, blockiert das Entriegelungselement 7 die Bewegung des freien Endes des Aufstellfußes 6 zusammen mit der Bewegung des Endlaufwagens 1. D.h., das freie Ende des Aufstellfußes 6 verfängt sich an dem Entriegelungselement 7 und wird durch das Entriegelungselement 7 entgegen der Bewegung des sich nach hinten bewegenden Endlaufwagens 1 nach vorne gedrückt, so dass der Auflagewinkel β vergrößert wird und der Pendelwinkel γ verkleinert wird. Dadurch wird die Arretierung des Aufstellfußes 6, d.h., der Eingriff des Vorsprungs 6a mit dem nach unten umgekantenen Bereich 4c, gelöst, so dass der Öffnungswinkel α verringert und der Aufstellarm 5 mit dem Portalbalken 8 in die geschlossene Stellung geschwenkt werden kann. Insbesondere wird der Aufstellarm 5 mit dem Portalbalken 8 durch die auf den Portalbalken 8 wirkende Schwerkraft in die geschlossene Stellung gedrückt.

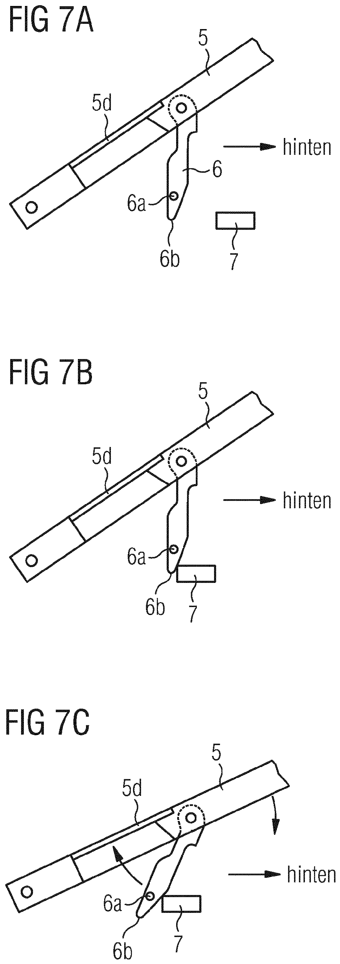

Die Funktionsweise des Entriegelungselements 7 ist in den Figuren 7A bis 7C, in denen ein Teil des Aufstellarms 5, der Aufstellfuß 6 und das Entriegelungselement 7 gezeigt sind, schematisch dargestellt.

Fig. 7A zeigt eine Situation beim Verschieben des Endlaufwagens 1 nach hinten, bevor der Endlaufwagen 1 die in den Figuren 3 bis 6C dargestellte hintere Endposition erreicht. Der Aufstellarm 5 befindet sich in der ersten offenen Stellung. Die Längserstreckungsrichtung des Aufstellfußes 6 ist annähernd vertikal. Das freie Ende 6b des Aufstellfußes 6 ist nicht in Eingriff mit dem Entriegelungselement 7, sondern ist von dem Entriegelungselement 7 beabstandet.

Fig. 7B zeigt eine Situation, kurz bevor der Endlaufwagen 1 die hintere Position erreicht. Der Aufstellarm 5 befindet sich immer noch in der ersten offenen Stellung. Die Längserstreckungsrichtung des Aufstellfußes 6 ist annähernd vertikal. Das freie Ende 6b des Aufstellfußes 6 kommt jedoch in Eingriff mit dem Entriegelungselement 7. Insbesondere liegt ein hinterer Teil des freien Endes 6b des Aufstellfußes 6 an einem vorderen Ende des Entriegelungselement 7 an.

Bei einer weiteren Verschiebung des Endlaufwagens 1 nach hinten wird das freie Ende 6b des Aufstellfußes 6 durch das Entriegelungselement 7 relativ zu dem Endlaufwagen 1 bzw. dem Grundelement 4 nach vorne gedrückt. Dadurch gerät der Aufstellfuß 6 in eine geneigte Stellung, wie in Fig. 7C dargestellt ist. In der geneigten Stellung kann der Aufstellfuß 6 die auf den als Abschlusselement dienenden Portalbalken 8 wirkende Schwerkraft nicht mehr tragen. Der Aufstellarm 5 wird durch die Gewichtskraft des Portalbalkens 8 nunmehr automatisch in die geschlossene Stellung geschwenkt, wobei der Aufstellfuß 6 in die Aussparung 5d geschwenkt wird.

In der vorliegenden Ausführungsform sind das Grundelement 4 und der Aufstellarm 5 jeweils aus einer Metallplatte mit einer Stärke im Bereich von 2 mm bis 15 mm ausgebildet. Der Aufstellfuß 6 ist ein längliches Bauteil mit einer festen Länge in der Längserstreckungsrichtung im Bereich von 2 cm bis 30 cm. Der Vorsprung 6a steht beispielsweise um 5 mm bis 30 mm von dem Aufstellfuß 6 vor. Eine obere Oberfläche des Grundelements 4 und eine obere Oberfläche des Aufstellarms 5 bilden im geschlossenen Zustand eine ebene Auflagefläche für die Dachplane.

In dem umgekanteten Bereich 4b des Grundelements 4 ist ein Loch 4h zur Anbringung einer Vorrichtung zum Verschieben des Endlaufwagens 1 ausgebildet. Bei der Vorrichtung zum Verschieben des Endlaufwagens 1 kann es sich beispielsweise um ein Seil, eine Kette, eine Stange, eine Schlaufe oder eine automatische Zuziehhilfe handeln.

In der vorliegenden Ausführungsform weist der Dachquerspriegel 3, der die beiden Grundelemente 4 miteinander verbindet, eine identische Ausgestaltung wie die übrigen Dachquerspriegel 3 der Schiebeverdeckstruktur 30 auf.

Der Vorsprung 6a kann weggelassen werden und das freie Ende 6b des Aufstellfußes 6 kann in der ersten und/oder zweiten offenen Stellung auf andere Weise mit dem Grundelement 4 in Eingriff gebracht werden.

An dem Endlaufwagen 1 kann ein Verriegelungsmechanismus zum Verriegeln des Portalbalkens 8 oder Endspriegels in der geschlossenen Stellung vorgesehen sein.

In der ersten offenen Stellung, in der der Öffnungswinkel α kleiner als 90° ist, verhindert die Arretierung durch den Eingriff des Aufstellfußes 6 mit dem Grundelement 4, dass sich der Aufstellarm 5 zusammen mit dem Portalbalken 8 zurück in die geschlossene Stellung bewegt bzw. geschwenkt wird, d.h., dass sich der Öffnungswinkel α verkleinert. Die Arretierung verhindert nicht, dass sich der Aufstellarm 5 zusammen mit dem Portalbalken 8 in die zweite offene Stellung bewegt bzw. geschwenkt wird, d.h., dass sich der Öffnungswinkel α vergrößert bzw. dass der Portalbalken weiter angehoben wird. Die Arretierung liegt also lediglich in einer Richtung der Schwenkbewegung vor. Die auf den Portalbalken 8 und den Aufstellarm 5 wirkende Schwerkraft wirkt jedoch einer Bewegung bzw. Schwenkung von der ersten offenen Stellung in die zweite offene Stellung entgegen, so dass der Portalbalken 8 für eine solche Bewegung bzw. Schwenkung entgegen der Schwerkraft angehoben werden muss.

In der zweiten offenen Stellung, in der der Öffnungswinkel α größer als 90° ist, verhindert die Arretierung durch den Eingriff des Aufstellfußes 6 mit dem Grundelement 4, dass sich der Aufstellarm 5 zusammen mit dem Portalbalken 8 weiter in Richtung auf das vordere Ende des Endlaufwagens 1 bzw. des Grundelements 4 bewegt bzw. geschwenkt wird, d.h., dass sich der Öffnungswinkel α vergrößert. Die Arretierung verhindert nicht, dass sich der Aufstellarm 5 zusammen mit dem Portalbalken 8 zurück in die erste offene Stellung bewegt bzw. geschwenkt wird, d.h., dass sich der Öffnungswinkel α verkleinert. Die Arretierung liegt also lediglich in einer Richtung der Schwenkbewegung vor. Die auf den Portalbalken 8 und den Aufstellarm 5 wirkende Schwerkraft wirkt jedoch einer Bewegung bzw. Schwenkung von der zweiten offenen Stellung in die erste offene Stellung entgegen, so dass der Portalbalken 8 für eine solche Bewegung bzw. Schwenkung entgegen der Schwerkraft angehoben werden muss.

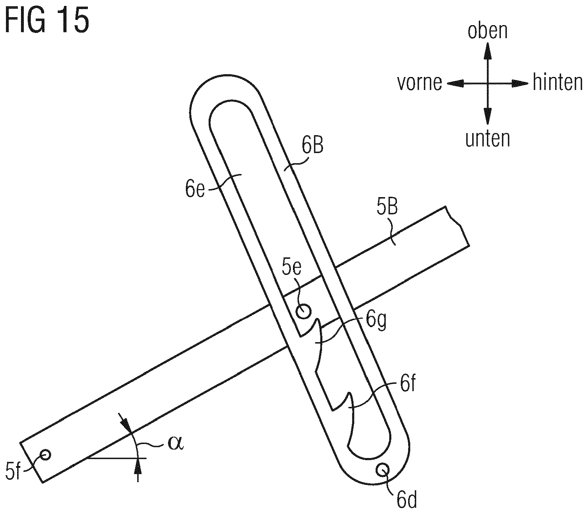

Anstelle des frei pendelnd an dem Aufstellarm 5 angebrachten Aufstellfußes 6 kann ein Aufstellfuß 6B mit einer Kulissenführung verwendet werden. Eine derartige Ausgestaltung ist in Fig. 15 schematisch dargestellt. Fig. 15 zeigt eine Seitenansicht des Aufstellfußes 6B und eines Aufstellarms 5B. Die übrigen Bestandteile des Endlaufwagens 1 sind der Einfachheit halber in Fig. 15 nicht dargestellt. Der Aufstellfuß 6B ist ein längliches Bauteil. Der Aufstellfuß 6B ist an einem Ende in seiner Längserstreckungsrichtung, beispielsweise über einen Stift 6d, eine Schraube oder ein Gelenk, um eine sich in der Links-rechts-Richtung erstreckende Achse schwenkbar an dem umgekanteten Bereich 4c des Grundelements 4 angebracht. Der Aufstellfuß 6B weist ein Langloch 6e auf, das sich in seiner Längserstreckungsrichtung erstreckt. Der Aufstellfuß 6B weist zwei Vorsprünge 6f, 6g auf, die in das Langloch 6e hineinragen und jeweils in Form einer Haifischflosse ausgebildet sind.

Der Aufstellarm 5B ist an seinem vorderen Ende, beispielsweise über einen Stift 5f, eine Schraube oder ein Gelenk, schwenkbar dem umgekanteten Bereich 4c des Grundelements 4 angebracht. An dem Aufstellarm 5B ist ein Vorsprung 5e vorgesehen, der in das Langloch 6e des Aufstellfußes 6B ragt und entlang des Langlochs 6e verschiebbar ist. Der Aufstellarm 5B kann durch Eingriff des Vorsprungs 5e mit den Vorsprüngen 6f, 6g in zwei offenen Stellungen arretiert werden. In Fig. 15 ist eine Situation dargestellt, in der der Vorsprung 5e mit dem oberen der beiden Vorsprünge 6g in Eingriff ist und der Aufstellarm 5B in einer ersten offenen Stellung mit einem Öffnungswinkel α von weniger als 90° arretiert ist. Der Vorsprung 5e kann auch mit dem Vorsprung 6f in Eingriff gebracht werden. Die Länge des Langlochs 6e in der Längserstreckungsrichtung ist so gewählt, dass der Vorsprung 5e von der in Fig. 15 dargestellten Position, d.h. der Eingriffsposition mit dem zweiten Vorsprung 6g, weiter entlang des Langlochs 6e bis zu einer Position verschoben werden kann, in der sich der Aufstellarm 5B in einer zweiten offenen Stellung mit einem Öffnungswinkel α von mehr als 90° befindet. In dieser Position kann der Vorsprung 5e an dem zu dem Punkt 6d entgegengesetzten Ende des Langlochs 6e anliegen. Somit kann der Aufstellarm 5B durch das Ende des Langlochs 6e in der zweiten offenen Stellung gehalten werden. Der Vorsprung 5e muss jedoch in der zweiten offenen Stellung nicht zwingend an dem Ende des Langlochs 6e anliegen. Der Aufstellarm 5B kann in der zweiten offenen Stellung auch auf andere Weise gehalten werden. Die Länge des Langlochs 6e ist größer als der Abstand zwischen den Punkten 5f und 6d in Fig. 15. Das Langloch 6e weist beispielsweise eine Länge von mindestens 10cm oder mindestens 20 cm auf. Die beiden Vorsprünge 6f, 6g sind einem vorderen bzw. unteren Bereich des Langlochs 6e, d.h. auf der Seite des Aufstellfußes 6B, auf der der Aufstellfuß 6B an dem Grundelement 4 angebracht ist, angeordnet. Beispielsweise sind die Vorsprünge 6f, 6g in der vorderen bzw. unteren Hälfte oder in dem vorderen bzw. unteren Drittel des Langlochs 6e angeordnet. Die Haifischflossenform der Vorsprünge 6f, 6g ist so gewählt, dass eine Verschiebung des Vorsprungs 5e in Richtung des vorderen bzw. unteren Bereichs des Langlochs 6e, d.h. in Richtung der Seite des Punktes 6d, verhindert werden kann, während eine Verschiebung in der entgegengesetzten Richtung nicht verhindert wird.

Es ist in dieser Ausgestaltung möglich, lediglich einen der beiden Vorsprünge 6f, 6g vorzusehen oder weitere Vorsprünge vorzusehen, mit denen der Vorsprung 5e in Eingriff gebracht werden kann. Alternative können die Vorsprünge 6f, 6g, weggelassen werden, und der Aufstellarm 5B kann lediglich durch Eingriff des Vorsprungs 5e mit dem dem Punkt 6d entgegengesetzten Ende des Langlochs 5e in der zweiten offenen Stellung gehalten werden. In dieser Ausgestaltung sind die Aussparungen 4f und 4g und das Entriegelungselement 7 nicht erforderlich. Sowie der Vorsprung 5e während der ersten offenen Stellung außer Eingriff mit den Vorsprüngen 6f bzw. 6g in Richtung des Punktes 6d gebracht wird, erfolgt ein automatisches Verschließen und der Aufstellarm 5B nebst Portalbalken 8 bewegt sich automatisch in die geschlossene Stellung.

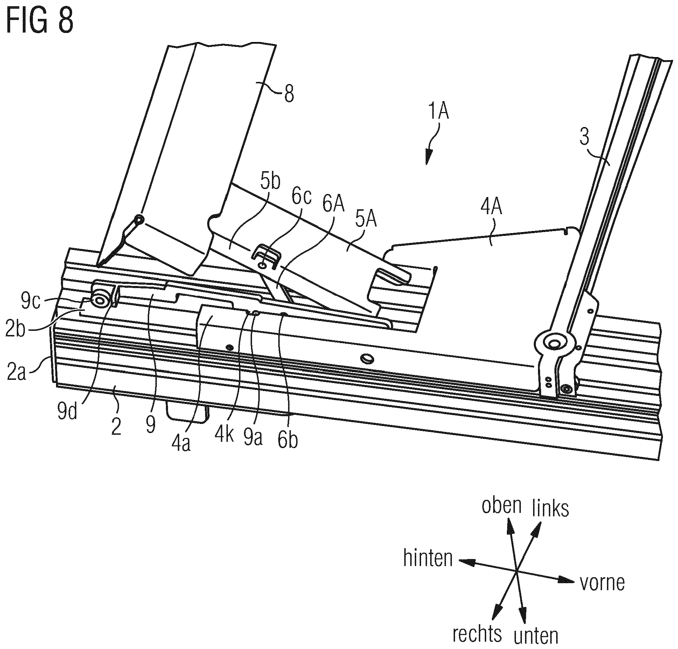

Nachfolgend wird eine zweite Ausführungsform eines Endlaufwagens 1A in Bezug auf die Figuren 8 bis 14C beschrieben. Der Endlaufwagen 1A gemäß der zweiten Ausführungsform entspricht im Wesentlichen dem Endlaufwagen 1 gemäß der zuvor beschriebenen ersten Ausführungsform, abgesehen von den sich aus der nachfolgenden Beschreibung ergebenden Unterschieden.

Das Grundelement 4A weist die Aussparungen 4f und 4g nicht auf, sondern weist in dem in der Laufschiene des Dachholms 2 anordneten nach unten umgekanteten Bereich 4c eine L-förmige Aussparung bzw. ein L-förmiges Loch 4k auf. Der lange Schenkel der L-förmigen Aussparung 4k erstreckt sich in der Vorne-Hinten-Richtung, d.h. in horizontaler Richtung, in dem nach unten umgekanteten Bereich 4c. Der kurze Schenkel der L-förmigen Aussparung 4k erstreckt sich von dem hinteren Ende des langen Schenkels in dem umgekanteten Bereich 4c vertikal nach oben und über die Kante geringfügig in den flachen Bereich 4a hinein.

Der Aufstellarm 5A weist die Aussparung 5d nicht auf. Der Aufstellfuß 6A ist an dem Aufstellarm 5A an einem Punkt 6c in dem umgekanteten Bereich 5b in einer Ebene senkrecht zu der Links-Rechts-Richtung, beispielsweise durch einen Stift, schwenkbar angebracht. Der Aufstellfuß 6A ist ein längliches Bauteil. Ein erstes Ende des Aufstellfußes 6A ist beispielsweise mittels eines Stifts gelenkig an dem umgekanteten Bereich 5b angebracht, so dass der Aufstellfuß 6A um eine in der Links-Rechts-Richtung verlaufende Achse relativ zu dem Aufstellarm 5A geschwenkt werden kann.

An dem gegenüberliegenden zweiten Ende ist der Aufstellfuß 6A, beispielsweise über einen Stift 6b, gelenkig mit einem Schieberelement 9 verbunden. Das Schieberelement 9 ist ein längliches Bauteil. Das zweite Ende des Aufstellfußes 6A ist etwa bei einem Drittel der Gesamtlänge des Schieberelements 9 in dem vorderen Bereich in der Längserstreckungsrichtung des Schieberelements 9 an dem Schieberelement 9 angebracht.

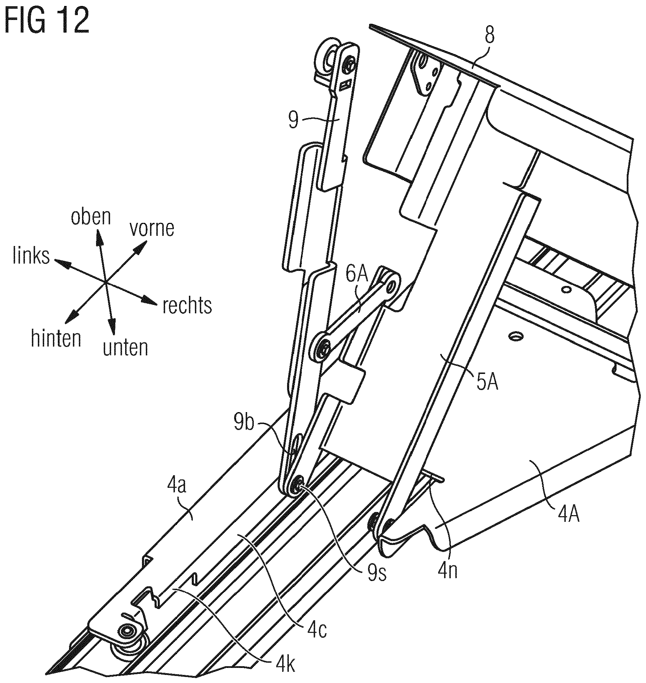

Das Schieberelement 9 weist an seinem vorderen Ende ein Langloch 9b (siehe Figur 12) auf, dessen Längserstreckungsrichtung parallel zu der Längserstreckungsrichtung des Schieberelements 9 verläuft. Die Länge L des Langlochs 9b entspricht im Wesentlichen der Länge L des langen Schenkels der L-förmigen Aussparung 4k und liegt beispielsweise im Bereich von 1 cm bis 10 cm. Das vordere Ende des Schieberelements 9 ist zwischen dem umgekanteten Bereich 4c des Grundelements 4A und dem umgekanteten Bereich 5b des Aufstellarms 5A eingefügt. Ein Stift 9s (siehe Figur 12), über den der umgekantete Bereich 5b des Aufstellarms 5A mit dem umgekanteten Bereich 4c des Grundelements 4A verbunden ist, verläuft durch das Langloch 9b des Schieberelements 9. Somit ist das Schieberelement 9 entlang des Langlochs 9b relativ zu dem Grundelement 4A und dem Aufstellarm 5A längsverschiebbar sowie um den Stift 9s schwenkbar.

Das Schieberelement 9 weist in einem mittleren Bereich in der Längserstreckungsrichtung auf der dem umgekanteten Bereich 4c zugewandten Seite einen Vorsprung (beispielsweise einen Stift) 9a auf. Der Vorsprung 9a ragt in der in Fig. 8 dargestellten Anordnung in die L-förmige Aussparung 4k hinein. In der in Fig. 8 dargestellten ersten offenen Stellung ragt der Vorsprung 9a in dem Bereich des kurzen Schenkels in die Aussparung 4k hinein.

Das Schieberelement 9 weist an seinem hinteren Ende eine Rolle 9c, die dazu ausgebildet ist, auf einer Führungsschiene 2b des Dachholms 2 zu rollen, und vor der Rolle 9c einen quer zu der Längserstreckungsrichtung des Schieberelements 9 vorstehenden Vorsprung 9d auf. Die Führungsschiene 2b endet bereits vor dem hinteren Ende 2a des Dachholms 2. Ein hinteres Ende der Führungsschiene 2b liegt beispielsweise im Bereich von 0,1 cm bis 10 cm vor dem hinteren Ende 2a des Dachholms 2. Anstelle der Rolle 9c kann beispielsweise ein Gleitstück als Führungselement an dem hinteren Ende des Schieberelements 9 angebracht sein.

In der vorliegenden Ausführungsform ist an dem Dachholm 2 kein Entriegelungselement 7 vorgesehen.

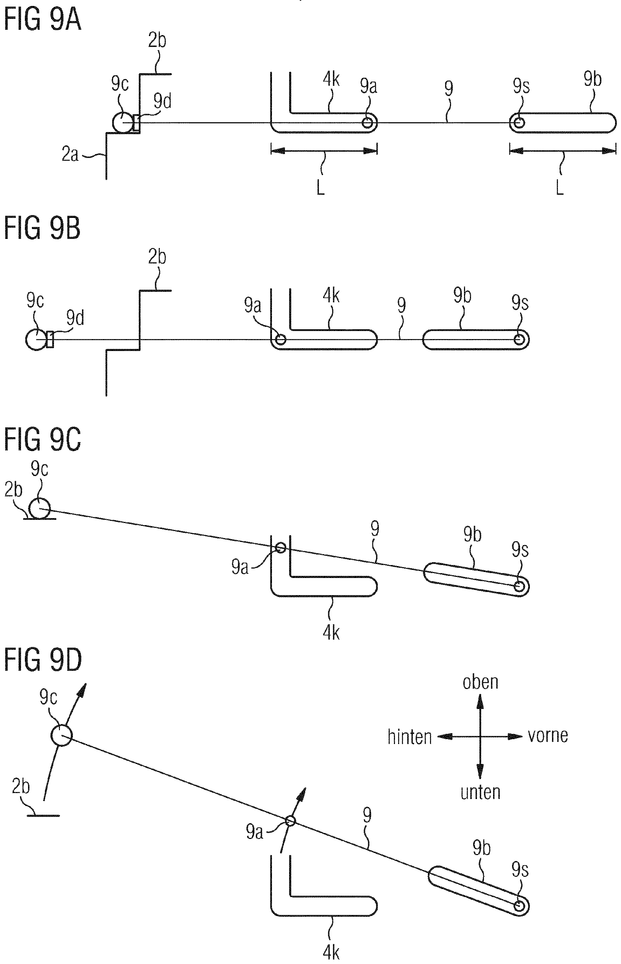

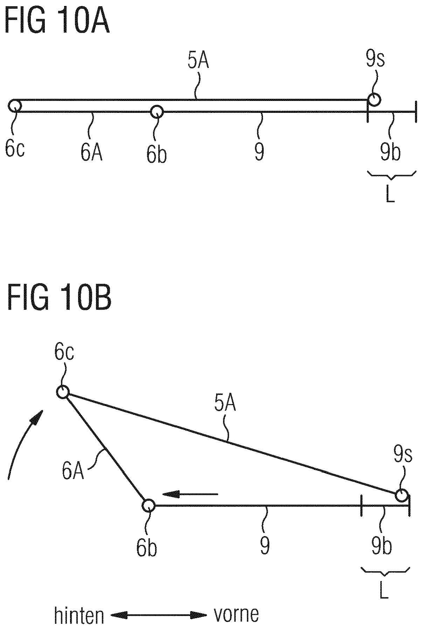

Die Funktionsweise des Mechanismus zum Arretieren bzw. Halten des Portalbalkens 8 in dem Endlaufwagen 1A der vorliegenden Ausführungsform wird in Bezug auf die Figuren 9A bis 9D und 10A und 10B erläutert.

In der in Fig. 9A dargestellten geschlossenen Stellung ist das Schieberelement 9 in Bezug auf das Grundelement 4A in eine Grundposition nach vorne geschoben, d.h., der Stift 9s befindet sich an einem hinteren Ende des Langlochs 9b und der Vorsprung 9a befindet sich an einem vorderen Ende des langen Schenkels der L-förmigen Aussparung 4k. Die Rolle 9c und der Vorsprung 9d befinden sich hinter dem hinteren Ende der Führungsschiene 2b des Dachholms 2. Der Vorsprung 9d ist in Eingriff mit dem hinteren Ende der Führungsschiene 2b und verhindert, dass der Endlaufwagen 1A nach vorne verschoben wird. Durch den Eingriff des hinteren Endes der Führungsschiene 2b mit dem Vorsprung 9d kann eine Zugkraft zwischen dem Dachholm 2 und dem Endlaufwagen 1A wirken, durch die der Endlaufwagen 1A nach hinten in die Endposition gezogen wird. Dadurch kann beispielsweise die Dachplane gespannt werden. In dieser geschlossenen Stellung ist der Aufstellfuß 6A im Wesentlichen horizontal ausgerichtet. Auch der Aufstellarm 5A erstreckt sich in horizontaler Richtung. Die räumliche Anordnung des Aufstellarms 5A, des Aufstellfußes 6A und des Schieberelements 9 in der geschlossenen Stellung entsprechend der Grundposition des Schieberelements 9 ist in Fig. 10A schematisch dargestellt.

Beim Öffnen der Schiebeverdeckstruktur 30 werden der als Abschlusselement dienende Portalbalken 8 und der Aufstellarm 5A zu der ersten offenen Stellung angehoben. Das an dem Punkt 6c an dem Aufstellarm 5A angebrachte erste Ende des Aufstellfußes 6A wird dabei zusammen mit dem Aufstellarm 5A angehoben. Dadurch wird das über den Stift 6b mit dem Schieberelement 9 verbundene zweite Ende des Aufstellfußes 6A zusammen mit dem daran angebrachten Schieberelement 9 nach hinten gezogen.

Dies ist in Fig. 10B schematisch dargestellt. Der Abstand zwischen dem Punkt 6b, an dem der Aufstellfuß 6A an dem Schieberelement 9 angebracht ist, und dem Punkt 6c, an dem der Aufstellfuß 6A an dem Aufstellarm 5A angebracht ist, sowie der Abstand zwischen dem Punkt 6c und dem Stift 9s entlang des Aufstellfußes 5A sind konstant. Durch Anheben des Punktes 6c beim Aufstellen des Aufstellarms 5A, so dass die Punkte 6c, 6b und 9s, die in der Darstellung in Fig. 10A linear in der Horizontalen angeordnet sind, in der Darstellung in Fig. 10B an den Eckpunkten eines Dreiecks angeordnet sind, wird der Punkt 9s an das vordere Ende des Langlochs 9b verschoben bzw. das Langloch 9b wird relativ zu dem Stift 9s nach hinten verschoben, so dass der Abstand zwischen den Punkten 6b und 9s vergrößert wird. Mit anderen Worten, das Schieberelement 9 wird relativ zu dem Grundelement 4A und dem Aufstellarm 5A entlang seiner Längserstreckungsrichtung nach hinten zu einer in Fig. 9B dargestellten verschobenen Position verschoben.

Durch weiteres Aufstellen des Aufstellarms 5A wird über den Aufstellfuß 6A und den Stift 6b das Schieberelement 9 um den Stift 9s in der Darstellung in Fig. 9B im Uhrzeigersinn zu einer in Fig. 9C dargestellten geschwenkten Position geschwenkt. Der Vorsprung 9a wird bei dieser Bewegung nach vorne in den oberen Teil des kurzen Schenkels der L-förmigen Aussparung 4k bewegt, wie in Fig. 9C dargestellt ist. Die Rolle 9c wird durch die Schwenkbewegung des Schieberelements 9 angehoben.

In dieser Stellung kann der Endlaufwagen 1A nach vorne entlang des Dachholms 2 verschoben werden. Dabei kann die angehobene Rolle 9c auf die Führungsschiene 2b des Dachholms 2 gesetzt werden, wie in Fig. 8 dargestellt ist. Durch die auf der Führungsschiene 2b des Dachholms 2 laufende Rolle 9c wird verhindert, dass das hintere Ende des Schieberelements 9 nach unten in die verschobenen Position zurückgeschwenkt wird. Somit wird der Vorsprung 9a in dem oberen Bereich des kurzen Schenkels der L-förmigen Aussparung 4k gehalten und es wird verhindert, dass der Vorsprung 9a nach unten in den langen Schenkel der L-förmigen Aussparung zurückwandert. Aufgrund der Positionierung des Vorsprungs 9a in dem kurzen Schenkel der L-förmigen Aussparung 4k ist in dieser Stellung eine Längsverschiebung des Schieberelements 9 nach vorne relativ zu dem Grundelement 4A und dem Aufstellfuß 5A nicht möglich, d.h., der Stift 9s bleibt an dem vorderen Ende des Langlochs 9b. Durch diese relative Position des Schieberelements 9 zu dem Grundelement 4A und dem Aufstellarm 5A wird der Aufstellfuß 6A in der relativ zu dem Grundelement 4A aufgestellten Stellung gehalten, in der der Aufstellfuß 6A den Aufstellarm 5A und den daran angebrachten Portalbalken 8 in der ersten offenen Stellung hält.

Beim Aufstellen des Aufstellarms 5A von der geschlossenen Stellung zu der ersten offenen Stellung wird also zunächst das Schieberelement 9 von der Grundposition in die verschobene Position längsverschoben und dann von der verschobenen Position in die geschwenkte Position geschwenkt. Dabei wird der Vorsprung 9a durch die L-förmige Aussparung 4k geführt. In der geschwenkten Position wird ein Zurückschwenken zu der verschobenen Position verhindert, solange die Rolle 9c auf der Führungsschiene 2b aufliegt. Zudem wird in der geschwenkten Position durch Eingriff des Vorsprungs 9a mit dem Rand des kurzen Schenkels der L-förmigen Aussparung 4k eine Verschiebung des Schieberelements 9 entlang der Längserstreckungsrichtung des Schieberelements 9 bzw. des Langlochs 9b verhindert.

Bei einem weiteren Aufstellen des Aufstellarms 5A und des Portalbalkens 8 über die erste offene Stellung hinaus wird der Vorsprung 9a nach oben aus dem kurzen Schenkel der L-förmigen Aussparung 4k gehoben und das Schieberelement 9 wird zusammen mit dem Aufstellarm 5A und dem Aufstellfuß 6A in der Darstellung in Fig. 9D im Uhrzeigersinn geschwenkt. Dabei wird die Rolle 9c von der Führungsschiene 2b des Dachholms 2 abgehoben. Auf diese Weise können der Portalbalken 8 und der Aufstellarm 5A zu einer zweiten offen Stellung mit einem Öffnungswinkel α von mehr als 90° angehoben bzw. geschwenkt werden. Bei einem Öffnungswinkel α von mehr als 90° werden der Portalbalken 8 und der Aufstellarm 5A durch die Schwerkraft weiter im Uhrzeigersinn auf die Vorderseite des Endlaufwagens 1A gedrückt und somit in der offenen Stellung gehalten.

Zum Schließen der Schiebeverdeckstruktur 30 werden der Aufstellarm 5A und der Portalbalken 8 in die in Fig. 9B dargestellte erste offene Stellung zurückgeschwenkt. Wenn die Rolle 9c beim Verschieben des Endlaufwagens 1A zu dem hinteren Ende 2a des Dachholms 2 das hintere Ende der Führungsschiene 2b des Dachholms 2 erreicht, fällt die Rolle 9c über das hintere Ende der Führungsschiene 2b auf den darunter liegenden Teil des Dachholms 2, so dass das hintere Ende des Schieberelements 9 nach unten geschwenkt wird. D.h., das Schieberelement 9 wird von der in Fig. 9C dargestellten geschwenkten Position in die in Fig. 9B dargestellte verschobene Position zurückgeschwenkt. Dadurch gelangt der Vorsprung 9a in den unteren Teil des kurzen Schenkels bzw. den hinteren Teil des langen Schenkels der L-förmigen Aussparung 4k, so dass das Schieberelement 9 relativ zu dem Grundelement 4A und dem Aufstellarm 5A nach vorne in die in Fig. 9A darstellte Grundposition verschoben werden kann. Aufgrund der auf den Portalbalken 8 wirkenden Schwerkraft wird der Aufstellarm 5A von der in Fig. 10B dargestellten aufgestellten Position in die in Fig. 10A dargestellte horizontale, geschlossene Position gedrückt. Dabei wird das Schieberelement 9 durch den Aufstellfuß 6A an dem Punkt 6b nach vorne gedrückt, so dass sich das gesamte Schieberelement 9 nach vorne in die Grundposition bewegt und der Stift 9s wieder an dem hinteren Ende des Langlochs 9b angeordnet ist. Dabei kippt der Aufstellfuß 6A nach unten. Der Endlaufwagen 1A befindet sich wieder in der geschlossenen Stellung, in der der Vorsprung 9d mit dem hinteren Ende der Führungsschiene 2b in Eingriff ist bzw. damit verspannt bzw. geschlossen und nebst wirkender Schwerkraft fixiert ist. D.h., beim Absenken des Aufstellarms 5A findet eine horizontale Bewegung relativ zu dem Dachholm 2 statt. Die Länge L des Langlochs 9b bestimmt einen möglichen Verspannungsweg. Zudem erfolgt eine Verspannung des Portalbalkens 8 an den Enden des Dachholms 2 durch die gespannte Dachplane.

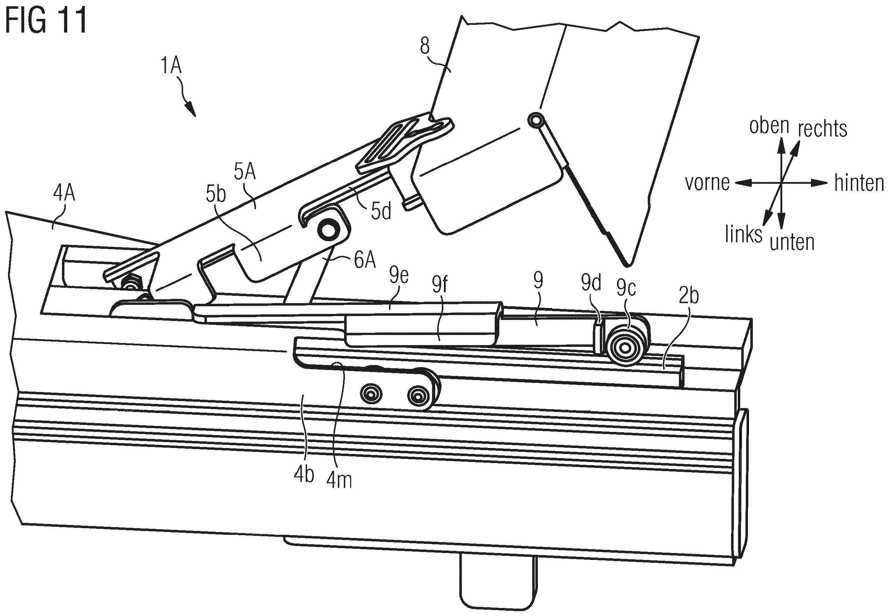

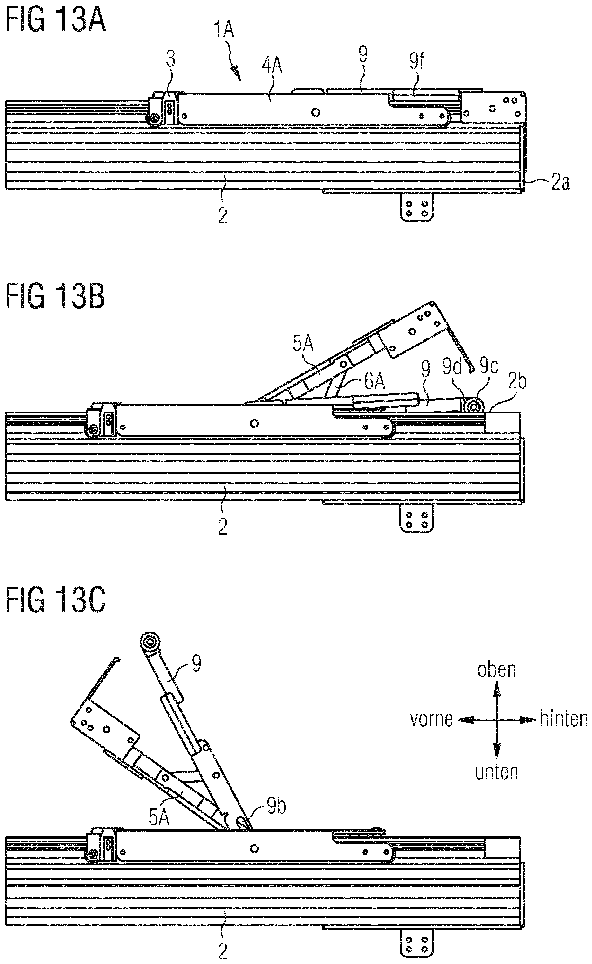

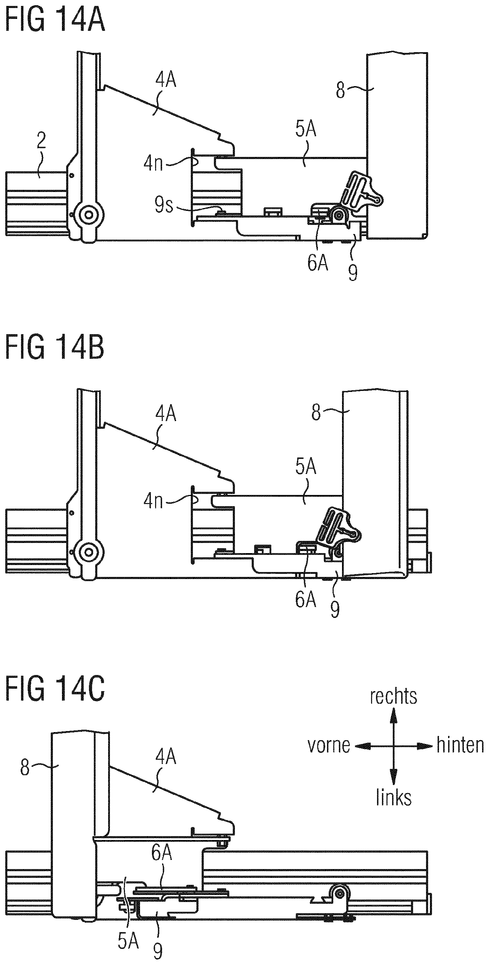

Die Figuren 11 bis 14C zeigen eine Abwandlung des Endlaufwagens 1A gemäß der zweiten Ausführungsform. In der Abwandlung weist der Aufstellarm 5A eine Aussparung 5d in dem umgekanteten Bereich 5b auf. Das Grundelement 4A weist in dem vorderen Teil des umgekanteten Bereichs 4b eine Aussparung 4m auf. Das Schieberelement 9 weist in seinem mittleren Teil in der Längserstreckungsrichtung eine im Wesentlichen U-förmige Ausgestaltung mit einem flachen, horizontal angeordneten Bereich 9e sowie einem außen an den flachen Bereich 9e anschließenden, nach unten umgekanteten Bereich 9f auf, der zu der Aussparung 4m komplementär ist. D.h., das Schieberelement 9 weist in seinem mittleren Teil in der Längserstreckungsrichtung ein im Wesentlichen U-förmiges Profil in einem Querschnitt senkrecht zu der Längserstreckungsrichtung auf. In der geschlossenen Stellung liegt der Bereich 9e auf dem flachen Bereich 4a des Grundelements 4A auf und der umgekantete Bereich 9f liegt in der Aussparung 4m, wie in den Figuren 13A und 14A dargestellt ist. Aufgrund der im Wesentlichen U-förmigen Ausgestaltung in seinem mittleren Teil weist das Schieberelement 9, das in der ersten offenen Stellung aufgrund der auf den Portalbalken 8 wirkenden Schwerkraft hohen Belastungen unterliegt, eine hohe Festigkeit auf.

In der in den Figuren 13B und 14B dargestellten ersten offenen Stellung ist das Schieberelement 9 relativ zu dem Grundelement 4A und dem Aufstellarm 5A nach hinten verschoben und nach oben geschwenkt. D.h., das Schieberelement 9 befindet sich in der geschwenkten Position. Der gesamte Endlaufwagen 1A ist auf dem Dachholm 2 nach vorne verschoben und die Rolle 9c sitzt auf der Führungsschiene 2b.

In der in den Figuren 12, 13C und 14C dargestellten zweiten offenen Stellung ist die Rolle 9c von der Führungsschiene 2b abgehoben. Der Aufstellarm 5A ist um den Stift 9s um mehr als 90° in Bezug auf die geschlossene Stellung geschwenkt. Der Aufstellfuß 6A und das Schieberelement 9 sind zusammen mit dem Aufstellarm 5A geschwenkt. Ein in der geschlossenen Stellung nach oben gerichteter Teil des flachen plattenartigen Bereichs 5a des Aufstellarms 5A liegt auf einer Kante 4n an dem vorderen Ende der Aussparung, die durch die beiden umgekanteten Bereiche 4c und 4d in dem flachen Bereich 4a des Grundelements 4A ausgebildet ist, auf, so dass eine weitere Schwenkung des Aufstellarms 5A verhindert wird. D.h., der Aufstellarm 5A liegt in der zweiten offenen Stellung auf dem Grundelement 4A auf. Der Aufstellarm 5A wird somit durch das Grundelement 4A bzw. die Kante 4n in der zweiten offenen Stellung gehalten, und die Kante 4n und der flache Bereich 5a haben die Funktion eines Mechanismus zum Arretieren bzw. Halten des Aufstellarms 5A.

In der Darstellung in Fig. 12 ist die L-förmige Aussparung 4k in dem umgekanteten Bereich 4c des Grundelements 4A nach unten offen. Die L-förmige Aussparung 4k kann alternativ nach unten geschlossen sein, wie es in den Figuren 9A bis 9D dargestellt ist. Alternativ kann nur der kurze Schenkel der L-förmigen Aussparung vorhanden sein und der Vorsprung 9a kann in den in den Figuren 9A, 9B, und 9D dargestellten Positionen nicht in der Aussparung geführt werden. Beim Schwenken von der in Fig. 9B dargestellten Position oder von der in Fig. 9D dargestellten Position in die in Fig. 9C dargestellte Position kann der Vorsprung 9a in den vorhandenen kurzen Schenkel der Aussparung eingebracht werden.

In der Darstellung in Fig. 12 ist das obere Ende des kurzen Schenkels der L-förmigen Aussparung 4k in dem Übergangsbereich zwischen dem flachen Bereich 4a und dem umgekanteten Bereich 4c des Grundelements 4A aufgeweitet. Dadurch kann der Vorsprung 9a beim Zurückschwenken des Aufstellarms 5A, des Aufstellfußes 6A und des Schieberelements 9 von der zweiten offenen Stellung in die erste offene Stellung problemlos in den kurzen Schenkel der L-förmigen Aussparung 4k eingeführt werden.

Zwischen dem Schieberelement 9 und dem Aufstellfuß 6A ist eine Drehfeder eingefügt, die in der in Fig. 12 dargestellten zweiten offenen Stellung einer Verschiebung des Schieberelements 9 nach unten entlang des Langlochs 9b entgegenwirkt, so dass u.a. das untere Ende des Schieberelements 9 nicht auf dem Dachholm 2 aufsteht, und so dass der Vorsprung 9a beim Zurückschwenken in die erste offene Stellung problemlos in den kurzen Schenkel der L-förmigen Aussparung 4k eingeführt werden kann. Die Drehfeder ist jedoch nicht zwingend erforderlich. Alternativ kann die Verschiebung des Schieberelements 9 in der zweiten offenen Stellung beispielsweise dadurch verhindert werden, dass das untere Ende des Schieberelements 9 auf dem Dachholm 2 aufsteht.

In den obigen Ausführungsformen wird der Aufstellarm 5, 5A durch den Aufstellfuß 6, 6A in der ersten offenen Stellung gehalten. In einer weiteren alternativen Ausführungsform können der Aufstellfuß 6, 6A und das Schieberelement 9 weggelassen werden. In dieser alternativen Ausführungsform weist der Endlaufwagen das Grundelement 4, 4A und den Aufstellarm 5, 5A auf. Der Aufstellarm 5, 5A und der daran angebrachte Portalbalken 8 können direkt von der geschlossenen Stellung in die zweite offene Stellung mit einem Öffnungswinkel α von mehr als 90° geschwenkt werden. Die erste offene Stellung entfällt in dieser Ausführungsform. Der Aufstellarm 5, 5A wird wie in der in Bezug auf Fig. 12 für die zweite Ausführungsform beschriebenen Weise durch die Kante 4n des Grundelements 4, 4A in der zweiten offenen Stellung gehalten. Alternativ kann ein Anschlag an dem Grundelement 4, 4A vorgesehen sein, der den Aufstellarm 5, 5A in der zweiten offenen Stellung hält, oder der Aufstellarm 5, 5A kann in der zweiten offenen Stellung gehalten werden, indem der Portalbalken 8 auf der Dachplane aufliegt.

Obwohl die bevorzugten Ausführungsformen dieser Offenbarung hierin beschrieben worden ist, können Verbesserungen und Modifikationen hierin eingearbeitet sein, ohne vom Schutzbereich der folgenden Ansprüche abzuweichen.

## Patentansprüche

1. Endlaufwagen (1, 1A) für eine Schiebeverdeckstruktur (30) eines Nutzfahrzeug- oder Anhängeraufbaus, mit:
- einem Grundelement (4, 4A) zur verschiebbaren Anbringung an einem Dachholm (2) des Nutzfahrzeug- oder Anhängeraufbaus, und
- einem schwenkbar an dem Grundelement (4, 4A) angebrachten Aufstellarm (5, 5A, 5B) zum Aufstellen eines an dem Aufstellarm (5, 5A, 5B) befestigten Abschlusselements (8) der Schiebeverdeckstruktur (30), wobei
der Aufstellarm (5, 5A, 5B) in eine erste offene Stellung, in der der Aufstellarm (5, 5A, 5B) um weniger als 90° in Bezug auf eine geschlossene Stellung geschwenkt ist, und in eine zweite offene Stellung, in der der Aufstellarm (5, 5A, 5B) um mehr als 90° in Bezug auf die geschlossene Stellung geschwenkt ist, bringbar ist, **dadurch gekennzeichnet, dass**
der Endlaufwagen (1, 1A) einen Haltemechanismus (6, 6g, 6f, 6A, 9) aufweist, der dazu ausgebildet ist, den Aufstellarm (5, 5A, 5B) in der ersten offenen Stellung zu halten.

2. Endlaufwagen (1, 1A) nach Anspruch 1, mit einem Haltemechanismus (6, 6e, 4n), der dazu ausgebildet ist, den Aufstellarm (5, 5A, 5B) in der zweiten offenen Stellung zu halten, in der der Aufstellarm (5, 5A, 5B) um mehr als 90° in Bezug auf die geschlossene Stellung geschwenkt ist.

3. Endlaufwagen (1, 1A) nach einem der vorhergehenden Ansprüche, wobei:
- der Endlaufwagen (1, 1A) zwei Teilwagen umfasst, die jeweils ein Grundelement (4, 4A) und einen Aufstellarm (5, 5A, 5B) aufweisen,
- die zwei Teilwagen durch ein an den beiden Aufstellarmen (5, 5A, 5B) befestigtes Abschlusselement (8) und ein weiteres, an den beiden Grundelementen (4, 4A) befestigtes Verbindungselement (3) miteinander verbunden sind, und
- das Verbindungselement (3) an einem zu dem Abschlusselement (8) in der geschlossenen Stellung entgegengesetzten Bereich der beiden Grundelemente (4, 4A) befestigt ist und die Grundelemente (4, 4A) starr miteinander verbindet.

4. Endlaufwagen (1) nach einem der vorhergehenden Ansprüche, mit einem frei pendelnd an dem Aufstellarm (5) angebrachten Aufstellfuß (6), der dazu ausgebildet ist, den Aufstellarm (5) in mindestens einer offenen Stellung abzustützen.

5. Endlaufwagen (1) nach Anspruch 4, wobei der Aufstellfuß (6) dazu ausgebildet ist, den Aufstellarm (5) in der ersten offenen Stellung und in der zweiten offenen Stellung auf dem Grundelement (4) abzustützen.

6. Endlaufwagen (1) nach Anspruch 4 oder 5, wobei der Aufstellfuß (6) ein längliches Bauteil ist, das an einem Ende in seiner Längserstreckungsrichtung gelenkig an dem Aufstellarm (5) angebracht ist und an dem anderen Ende einen Vorsprung (6a) aufweist, der dazu ausgebildet ist, auf dem Grundelement (4) aufzuliegen.

7. Endlaufwagen (1) nach einem der Ansprüche 4 bis 6, wobei in dem Grundelement (4) mindestens eine Aussparung (4f, 4g) ausgebildet ist, mit der ein freies Ende des Aufstellfußes (6) in einer offenen Stellung in Eingriff bringbar ist.

8. Endlaufwagen (1A) nach einem der Ansprüche 1 bis 3, mit einem Aufstellfuß (6A) und einem Schieberelement (9), wobei
- ein Ende des Aufstellfußes (6A) schwenkbar an dem Aufstellarm (5A) angebracht ist und das andere Ende des Aufstellfußes (6A) schwenkbar an dem Schieberelement (9) angebracht ist,
- das Schieberelement (9) relativ zu dem Grundelement (4A) und dem Aufstellarm (5A) längsverschiebbar und/oder schwenkbar ist, und
- der Aufstellarm (5A) durch Lageänderung des Schieberelements (9) relativ zu dem Grundelement (4A) mittels des Aufstellfußes (6A) zwischen der geschlossenen Stellung und der offenen Stellung geschwenkt werden kann.

9. Endlaufwagen (1A) nach Anspruch 8, wobei
- das Schieberelement (9) relativ zu dem Grundelement (4A) und dem Aufstellarm (5A) in einem Bereich mit einer bestimmten Länge (L) zwischen einer Grundposition und einer verschobenen Position längsverschiebbar ist sowie zwischen der verschobenen Position und einer geschwenkten Position schwenkbar ist,
- der Aufstellarm (5A) in der geschlossenen Stellung ist, wenn sich das Schieberelement (9) in der Grundposition befindet, und der Aufstellarm (5A) durch den Aufstellfuß (6A) in einer offenen Stellung gehalten wird, wenn sich das Schieberelement (9) in der geschwenkten Position befindet,
- das Grundelement (4A) eine Aussparung (4k) aufweist, die dazu ausgebildet ist, in der geschwenkten Position einen an dem Schieberelement (9) vorgesehenen Vorsprung (9a) aufzunehmen und durch Eingriff mit dem Vorsprung (9a) eine Längsverschiebung des Schieberelements (9) relativ zu dem Grundelement (4A) und dem Aufstellarm (5A) zu verhindern, und
- das Schieberelement (9) ein Führungselement (9c) aufweist, das dazu ausgebildet ist, in der geschwenkten Position durch eine Führungsschiene (2b) der Schiebeverdeckstruktur (30) geführt zu werden und eine Schwenkung des Schieberelements (9) von der geschwenkten Position zu der verschobenen Position zu verhindern.

10. Endlaufwagen (1A) nach Anspruch 9, wobei
- die Aussparung (4k) des Grundelements (4A) L-förmig ist und dazu ausgebildet ist, den Vorsprung (9a) während der Längsverschiebung des Schieberelements (9) zwischen der Grundposition und der verschobenen Position und während der Schwenkung des Schieberelements (9) zwischen der verschobenen Position und der geschwenkten Position zu führen, und
- das Schieberelement (9) ein Langloch (9b) aufweist, durch das ein Stift (9s) verläuft, der das Grundelement (4A) und den Aufstellarm (5A) schwenkbar verbindet.

11. Endlaufwagen (1A) nach einem der Ansprüche 8 bis 10, wobei das Schieberelement (9) ein längliches Bauteil ist und in zumindest einem Teil in der Längserstreckungsrichtung in einem Querschnitt senkrecht zu der Längserstreckungsrichtung ein im Wesentlichen U-förmiges Profil aufweist.

12. Endlaufwagen (1) nach einem der Ansprüche 1 bis 3, mit einem schwenkbar an dem Grundelement (4) angebrachten Aufstellfuß (6B), wobei
- der Aufstellfuß (6B) eine Kulissenführung aufweist,
- der Aufstellarm (5B) dazu ausbildet ist, in mindestens einer offenen Stellung mit der Kulissenführung in Eingriff gebracht zu werden, so dass der Aufstellarm (5B) in der mindestens einen offenen Stellung durch den Aufstellfuß (6B) abgestützt wird, und
- die Kulissenführung ein Langloch (6e) umfasst, das dem Aufstellarm (5B) erlaubt, in die offene Stellung gebracht zu werden, in der der Aufstellarm (5B) um mehr als 90° in Bezug auf die geschlossene Stellung geschwenkt ist.

13. Schiebeverdeckstruktur (30) mit:
- einem Dachholm (2), und
- einem Endlaufwagen (1, 1A) nach einem der vorhergehenden Ansprüche.

14. Schiebeverdeckstruktur (30) nach Anspruch 13, ferner mit einem Mechanismus (6b, 7; 2b, 9c), der dazu ausgebildet ist, eine Arretierung des Aufstellarms (5, 5A) mit dem daran befestigten Abschlusselement (8) in einer offenen Stellung bei einem Verschieben des Endlaufwagens (1, 1A) in einer Richtung zum Schließen der Schiebeverdeckstruktur (30) zu lösen, so dass der Aufstellarm (5, 5A) mit dem daran befestigten Abschlusselement (8) infolge der Schwerkraft automatisch in die geschlossene Stellung geschwenkt wird.

15. Schiebeverdeckstruktur (30) nach Anspruch 13 oder 14, wobei
- der Endlaufwagen (1) nach einem der Ansprüche 5 bis 8 ausgebildet ist, und
- an dem Dachholm (2) ein Entriegelungselement (7) angebracht ist, das dazu ausgebildet ist, den Aufstellfuß (6) beim Verschieben des Endlaufwagens (1) in einer Richtung zum Schließen der Schiebeverdeckstruktur (30) außer Eingriff mit dem Grundelement (4) zu bringen.

16. Schiebeverdeckstruktur (30) nach Anspruch 13 oder 14, wobei
- der Endlaufwagen (1A) nach einem der Ansprüche 9 bis 12 ausgebildet ist, und
- an dem Dachholm (2) eine Führungsschiene (2b) zur Führung des Führungselements (9c) vorgesehen ist.

17. Fahrzeuganhänger (100) mit einer Schiebeverdeckstruktur (30) nach einem der Ansprüche 13 bis 16.

## Claims

1. An end trolley (1, 1A) for a sliding cover structure (30) of a commercial vehicle superstructure or trailer superstructure, comprising:
- a base member (4, 4A) for slidable attachment to a roof beam (2) of the commercial vehicle superstructure or trailer superstructure, and
- an erection arm (5, 5A, 5B), which is pivotably attached to the base member (4, 4A) for erecting an end member (8) of the sliding cover structure (30), which end member is attached to the erection arm (5, 5A, 5B), wherein
the erection arm (5, 5A, 5B) can be brought into a first open position, in which the erection arm (5, 5A, 5B) is pivoted by less than 90° with respect to a closed position, and into a second open position, in which the erection arm (5, 5A, 5B) is pivoted by more than 90° with respect to the closed position, **characterized in that**
the end trolley (1, 1A) comprises a holding mechanism (6, 6g, 6f, 6A, 9) adapted to hold the erection arm (5, 5A, 5B) in the first open position.

2. The end trolley (1, 1A) according to claim 1, comprising a holding mechanism (6, 6e, 4n) which is adapted to hold the erection arm (5, 5A, 5B) in the second open position, in which the erection arm (5, 5A, 5B) is pivoted by more than 90° with respect to the closed position.

3. The end trolley (1, 1A) according to any one of the preceding claims, wherein:
- the end trolley (1, 1A) comprises two sub-trolleys, said sub-trolleys respectively comprising a base member (4, 4A) and an erection arm (5, 5A, 5B),
- the two sub-trolleys are connected to each other via an end member (8), which is attached to the two erection arms (5, 5A, 5B), and a further connection element (3), which is attached to the two base members (4, 4A), and
- the connection element (3) is attached to a portion of the two base members (4, 4A), which portion is opposed to the end member (8) in the closed position, and rigidly connects the base members (4, 4A) with each other.

4. The end trolley (1) according to any one of the preceding claims, comprising an erection foot (6) that is attached to the erection arm (5) in a freely suspended manner and adapted to support the erection arm (5) in at least one open position.

5. The end trolley (1) according to claim 4, wherein the erection foot (6) is adapted to support the erection arm (5) on the base member (4) in the first open position and the second open position.

6. The end trolley (1) according to claim 4 or 5, wherein the erection foot (6) is an elongate component that is hinged to the erection arm (5) on one end in its longitudinal direction and, on its other end, comprises a protrusion (6a), which is adapted to rest on the base member (4).

7. The end trolley (1) according to any one of claims 4 to 6, wherein at least one recess (4f, 4g), which can be engaged with a free end of the erection foot (6) in an open position, is formed in the base member (4).

8. The end trolley (1A) according to any one of claims 1 to 3, comprising an erection foot (6A) and a slide member (9), wherein
- one end of the erection foot (6A) is pivotably attached to the erection arm (5A), and the other end of the erection foot (6A) is pivotably attached to the slide member (9),
- the slide member (9) is longitudinally displaceable and/or pivotable relative to the base member (4A) and the erection arm (5A), and
- the erection arm (5A) can be pivoted between the closed position and the open position by changing the position of the slide member (9) relative to the base member (4A) via the erection foot (6A).

9. The end trolley (1A) according to claim 8, wherein
- in an area having a specified length (L), the slide member (9) is longitudinally displaceable relative to the base member (4A) and the erection arm (5A) between a basic position and a displaced position, and pivotable between the displaced position and a pivoted position,
- the erection arm (5A) is in the closed position when the slide member (9) is in the basic position, and the erection arm (5A) is held in an open position by the erection foot (6A) when the slide member (9) is in the pivoted position,
- the base member (4A) comprises a recess (4k) adapted to receive a protrusion (9a) provided on the slide member (9) in the pivoted position, and to prevent a longitudinal displacement of the slide member (9) relative to the base member (4A) and the erection arm (5A) by engaging with the protrusion (9a), and
- the slide member (9) comprises a guiding member (9c) adapted to be guided by a guiding rail (2b) of the sliding cover structure (30) in the pivoted position, and to prevent a pivoting movement of the slide member (9) from the pivoted position to the displaced position.

10. The end trolley (1A) according to claim 9, wherein
- the recess (4k) of the base member (4A) is L-shaped and adapted to guide the protrusion (9a) between the basic position and the displaced position during longitudinal displacement of the slide member (9), and between the displaced position and the pivoted position during the pivoting movement of the slide member (9), and
- the slide member (9) comprises an elongated hole (9b) through which a pin (9s) passes, which pin pivotably connects the base member (4A) and the erection arm (5A).

11. The end trolley (1A) according to any one of claims 8 to 10, wherein the slide member (9) is an elongate component and, in at least one portion in its longitudinal direction, comprises a substantially U-shaped profile in a cross section perpendicular to the longitudinal direction.

12. The end trolley (1) according to any one of claims 1 to 3, comprising an erection foot (6B) pivotably attached to the base member (4), wherein
- the erection foot (6B) comprises a link guide,
- the erection arm (5B) is adapted to be engaged with the link guide in at least one open position, such that the erection arm (5B) is supported by the erection foot (6B) in the at least one open position, and
- the link guide comprises an elongate hole (6e), which allows the erection arm (5B) to be brought into the open position, in which the erection arm (5B) is pivoted by more than 90° with respect to the closed position.

13. A sliding cover structure (30) comprising:
- a roof beam (2), and
- an end trolley (1, 1A) according to any one of the preceding claims.

14. The sliding cover structure (30) according to claim 13, further comprising a mechanism (6b, 7; 2b, 9c) adapted to disengage locking of the erection arm (5, 5A) with the attached end member (8) in an open position when displacing the end trolley (1, 1A) in a direction for closing the sliding cover structure (30), such that the erection arm (5, 5A) with the attached end member (8) is automatically pivoted to the closed position due to gravity.

15. The sliding cover structure (30) according to claim 13 or 14, wherein
- the end trolley (1) is formed according to any one of claims 5 to 8, and
- a release member (7) is attached to the roof beam (2), which release member is adapted to disengage the erection foot (6) from the base member (4) when displacing the end trolley (1) in a direction for closing the sliding cover structure (30).

16. The sliding cover structure (30) according to claim 13 or 14, wherein
- the end trolley (1A) is formed according to any one of claims 9 to 12, and
- the roof beam (2) is provided with a guiding rail (2b) for guiding the guiding member (9c).

17. A vehicle trailer (100) comprising a sliding cover structure (30) according to any one of claims 13 to 16.

## Revendications

1. Équerre coulissante arrière (1, 1A) pour une structure de toit coulissant (30) d'une carrosserie d'un véhicule utilitaire ou d'un remorque, avec:
- un élément de base (4, 4A) pour être fixé de manière coulissante sur un rail de toit (2) de la carrosserie du véhicule utilitaire ou du remorque, et
- un bras de montage (5, 5A, 5B) monté pivotant à l'élément de base (4, 4A) pour monter un élément de fermeture (8) de la structure de toit coulissant (30) fixé au bras de montage (5, 5A, 5B), dans laquelle
le bras de montage (5, 5A, 5B) est apte à être amené dans une première position ouverte, dans laquelle le bras de montage (5, 5A, 5B) est pivoté à moins de 90° par rapport à une position fermée, et dans une deuxième position ouverte, dans laquelle le bras de montage (5, 5A, 5B) est pivoté à plus de 90° par rapport à la position fermée, **caractérisée en ce que**
l'équerre coulissante arrière (1, 1A) comprend un mécanisme de maintien (6, 6g, 6f, 6A, 9), qui est conçu pour maintenir le bras de montage (5, 5A, 5B) dans la première position ouverte.

2. Équerre coulissante arrière (1, 1A) selon la revendication 1, avec un mécanisme de maintien (6, 6e, 4n) qui est conçu pour maintenir le bras de montage (5, 5A, 5B) dans la deuxième position ouverte, dans laquelle le bras de montage (5, 5A, 5B) est pivoté à plus de 90° par rapport à la position fermée.

3. Équerre coulissante arrière (1, 1A) selon l'une des revendications précédentes, dans laquelle:
- l'équerre coulissante arrière (1, 1A) comprend deux sous-équerres, dont chacune comporte un élément de base (4, 4A) et un bras de montage (5, 5A, 5B),
- les deux sous-équerres sont reliées entre elles par élément de fermeture (8) fixé aux deux bras de montage (5, 5A, 5B) et par un élément de liaison (3) additionnel fixé aux deux éléments de base (4, 4A), et
- l'élément de liaison (3) est fixé à une zone des deux éléments de base (4, 4A) opposée à l'élément de fermeture (8) dans la position fermée, et relie rigidement les éléments de base (4, 4A) entre eux.

4. Équerre coulissante arrière (1) selon l'une des revendications précédentes, avec un pied de support (6) suspendu librement au le bras de montage (5), qui est conçu pour supporter le bras de montage (5) dans au moins une position ouverte.

5. Équerre coulissante arrière (1) selon la revendication 4, dans laquelle le pied de support (6) est conçu pour supporter le bras de montage (5) dans la première position ouverte et dans la deuxième position ouverte sur l'élément de base (4).

6. Équerre coulissante arrière (1) selon la revendication 4 ou 5, dans laquelle le pied de support (6) est un composant allongé, qui est articulé à une extrémité dans sa direction d'étendue longitudinale au bras de montage (5) et qui comprend à l'autre extrémité une saillie (6a) qui est conçue pour reposer sur l'élément de base (4).

7. Équerre coulissante arrière (1) selon l'une des revendications 4 à 6, dans laquelle au moins un évidement (4f, 4g) est formé dans l'élément de base (4), moyennant lequel une extrémité libre du pied de support (6) peut être engagée dans une position ouverte.

8. Équerre coulissante arrière (1A) selon l'une des revendications 1 à 3, avec un pied de support (6A) et un élément coulissant (9), dans laquelle
- une extrémité du pied de support (6A) est montée de manière pivotable au bras de montage (5A) et l'autre extrémité du pied de support (6A) est montée de manière pivotable à l'élément coulissant (9),
- l'élément coulissant (9) est déplaçable longitudinalement et/ou pivotable par rapport à l'élément de base (4A) et le bras de montage (5A), et
- le bras de montage (5A) peut être pivoté entre la position fermée et la position ouverte en modifiant la position de l'élément coulissant (9) par rapport à l'élément de base (4A) au moyen du pied de support (6A).

9. Équerre coulissante arrière (1A) selon la revendication 8, dans laquelle
- l'élément coulissant (9) est déplaçable longitudinalement par rapport à l'élément de base (4A) et le bras de montage (5A) dans une plage d'une longueur (L) déterminée entre une position de base et une position déplacée, est pivotable entre la position déplacée et une position pivotée,
- le bras de montage (5A) est dans la position fermée quand l'élément coulissant (9) se trouve dans la position de base, et le bras de montage (5A) est maintenu dans une position ouverte par le pied de support (6A) quand l'élément coulissant (9) se trouve dans la position pivotée,
- l'élément de base (4A) est pourvu d'un évidement (4k) qui est conçu pour recevoir une saillie (9a) prévue sur l'élément coulissant (9) dans la position pivotée et pour empêcher, par engagement avec la saillie (9a), un déplacement longitudinal de l'élément coulissant (9) par rapport à l'élément de base (4A) et le bras de montage (5A), et
- l'élément coulissant (9) est pourvu d'un élément de guidage (9c) qui est conçu pour être guidé par un rail de guidage (2b) de la structure de toit coulissant (30) dans la position pivotée et pour empêcher un pivotement de l'élément coulissant (9) de la position pivotée à la position déplacée.

10. Équerre coulissante arrière (1A) selon la revendication 9, dans laquelle
- l'évidement (4k) de l'élément de base (4A) est en forme de L et est conçu pour guider la saillie (9a) pendant le déplacement longitudinal de l'élément coulissant (9) entre la position de base et la position déplacée et pendant le pivotement de l'élément coulissant (9) entre la position déplacée et la position pivotée, et
- l'élément coulissant (9) est pourvu d'une fente (9b) à travers laquelle s'étend une broche (9s) qui relie de manière pivotable l'élément de base (4A) et le bras de montage (5A).

11. Équerre coulissante arrière (1A) selon l'une des revendications 8 à 10, dans laquelle l'élément coulissant (9) est un composant allongé et présente un profil sensiblement en forme de U dans au moins une partie dans la direction longitudinale, dans une section transversale perpendiculaire à la direction longitudinale.

12. Équerre coulissante arrière (1) selon l'une des revendications 1 à 3, avec un pied de support (6B) monté de manière pivotable à l'élément de base (4), dans laquelle
- le pied de support (6B) est pourvu d'un guide à coulisse,
- le bras de montage (5B) est conçu pour être engagé avec le guide à coulisse dans au moins une position ouverte, de sorte que le bras de montage (5B) soit supporté par le pied de support (6B) dans l'au moins une position ouverte, et
- le guide à coulisse comprend une fente (6e) qui permet au bras de montage (5B) d'être amené dans la position ouverte, dans laquelle le bras de montage (5B) est pivoté à plus de 90° par rapport à la position fermée.

13. Structure de toit coulissant (30) avec:
- un rail de toit (2), et
- une équerre coulissante arrière (1, 1A) selon l'une des revendications précédentes.

14. Structure de toit coulissant (30) selon la revendication 13, comprenant en outre un mécanisme (6b, 7; 2b, 9c) qui est conçu pour verrouiller le bras de montage (5, 5A) avec l'élément de fermeture (8) attaché à celui-ci dans une position ouverte lorsque l'équerre coulissante arrière (1, 1A) est déplacée dans une direction de fermeture de la structure de toit coulissant (30), de sorte que le bras de montage (5, 5A) avec l'élément de fermeture (8) attaché à celui-ci soit pivoté automatiquement dans la position fermée à cause de la gravité.

15. Structure de toit coulissant (30) selon la revendication 13 ou 14, dans laquelle
- l'équerre coulissante arrière (1) est conçue selon l'une des revendications 5 à 8, et
- un élément de déverrouillage (7) est prévu au rail de toit (2), qui est conçu pour dégager le pied de support (6) de l'élément de base (4) lorsque l'équerre coulissante arrière (1) est déplacée dans une direction de fermeture de la structure de toit coulissant (30).

16. Structure de toit coulissant (30) selon la revendication 13 ou 14, dans laquelle
- l'équerre coulissante arrière (1A) est conçue selon l'une des revendications 9 à 12, et
- un rail de guidage (2b) est prévu au rail de toit (2) pour guider l'élément de guidage (9c).

17. Remorque de véhicule (100) avec une structure de toit coulissant (30) selon l'une des revendications 13 à 16.
